# EUROPÄISCHE PATENTSCHRIFT

(11) **EP 3 294 529 B1**
(45) Veröffentlichungstag und Bekanntmachung des Hinweises auf die Patenterteilung: **01.05.2019**
(21) Anmeldenummer: 16723992.0
(22) Anmeldetag: 10.05.2016
(51) Int. Cl.: B29C 67/00, B33Y 30/00, B33Y 50/02

(54) **VORRICHTUNG UND VERFAHREN ZUM AUFBRINGEN VON FLIESSFÄHIGEM MATERIAL AUF EINE UM EINE DREHACHSE DREHBARE UNTERLAGE**
DEVICE AND METHOD FOR APPLYING FLOWABLE MATERIAL TO A SUBSTRATUM THAT CAN BE ROTATED ABOUT AN AXIS OF ROTATION
DISPOSITIF ET PROCÉDÉ D'APPLICATION D'UN MATÉRIAU COULANT SUR UN SUPPORT POUVANT TOURNER AUTOUR D'UN AXE DE ROTATION

(30) Priorität: 11.05.2015 DE 102015005868
(43) Veröffentlichungstag der Anmeldung: 21.03.2018
(73) Patentinhaber: dp polar GmbH, 76344 Eggenstein-Leopoldshafen (DE)
(72) Erfinder: MATHEA, Hans, 76344 Eggenstein-Leopoldshafen (DE)
(74) Vertreter: Huwer, Andreas
(86) Internationale Anmeldenummer: PCT/EP2016/060480
(87) Internationale Veröffentlichungsnummer: WO 2016/180842

(56) Entgegenhaltungen:
- WO-A1-2014/092651
- WO-A1-2016/009426
- US-A1- 2012 165 969
- US-A1- 2013 189 435

## Beschreibung

Die Erfindung betrifft eine Vorrichtung zum Aufbringen von fließfähigem Material auf eine um eine Drehachse drehbare Unterlage gemäß vorgegebener Bilddaten, die als Bildpunkte oder als Vektoren eines bestimmten kartesischen Koordinatensystems, in einem ersten Speicher hinterlegt sind, mit wenigstens einem Drucckopf, der mehrere in einem Düsenabstand zueinander angeordnete Düsen zur Abgabe von Materialtröpfchen des fließfähigen Materials aufweist und in einem Vertikalabstand zur Unterlage angeordnet ist, und einer Steuerung zur Positionierung der Unterlage relativ zu dem wenigstens einen Druckkopf sowie zur Steuerung der Abgabe der Materialtröpfchen.

Des Weiteren betrifft die Erfindung ein Verfahren zum Aufbringen von fließfähigem Material auf eine sich um eine Drehachse drehbare Unterlage gemäß vorgegebener Bilddaten, die als Bildpunkte oder als Vektoren eines bestimmten kartesischen Koordinatensystems, in einem ersten Speicher hinterlegt sind, wobei Materialtröpfchen des fließfähigen Materials mittels eines Druckkopfes, der mehrere in einem Düsenabstand zueinander angeordnete Düsen aufweist, auf die Unterlage aufgebracht werden.

Eine derartige Vorrichtung beziehungsweise ein derartiges Verfahren ist beispielsweise aus der US 2004/0265413 A1 bekannt.

Bei der bekannten Vorrichtung sind zwei Druckkopfanordnungen in Druckkopfträgern angeordnet, welche an Schlitten befestigt sind, mittels welcher sie über eine kreisringförmige Unterlage in radialer Richtung verschiebbar sind. Mittels der Druckkopfanordnungen wird Material auf die kreisringförmige Unterlage aufgebracht. Da der Weg entlang des inneren Umfangs des Kreisrings kleiner ist als der Weg entlang des äußeren Umfangs des Kreisrings, ist die Dichte, des am inneren Umfang des Kreisrings aufgetragenen Materials höher, als die Dichte des am äußeren Umfang des Kreisrings aufgetragenen Materials.

Um dem zu begegnen, werden die Düsen der Druckkopfanordnungen so angesteuert, dass sie bei konstanter Winkelgeschwindigkeit der kreisringförmigen Unterlage sowie konstanter Geschwindigkeit, mit der die Druckkopfanordnungen in radialer Richtung über die Unterlage bewegt werden, eine trapezförmige Fläche besprühen, deren kürzere Grundseite dem inneren Umfang des Kreisrings zugewandt ist. Der Aufbau der bekannten Vorrichtung ist kompliziert und insbesondere wegen der verschiebbar angeordneten Druckkopfeinrichtungen störanfällig. Es können geometrische Verzerrungen und Inhomogenitäten im Druckbild auftreten. Da sehr viele kleine Druckköpfe vorhanden sind, ist ein Stitching praktisch unmöglich. Darüber hinaus ist die Druckgeschwindigkeit wegen der für die Verschiebung der Druckkopfanordnungen benötigte Zeit relativ langsam.

Es ist Aufgabe der vorliegenden Erfindung, eine eingangs genannte Vorrichtung beziehungsweise ein eingangs genanntes Verfahren derart auszubilden, dass ein zuverlässiger Arbeitsablauf und bei hoher Homogenität des Druckbildes eine hohe Druckgeschwindigkeit sowie Qualität erreicht wird.

Die Lösung dieser Aufgabe ergibt sich aus den Merkmalen der Ansprüche 1, 3, 11 und 13. Vorteilhafte Weiterbildungen der Erfindung ergeben sich aus den Unteransprüchen.

Gemäß der Offenbarung ist bei einer Vorrichtung der eingangs genannten Art vorgesehen, dass ein zweiter Speicher vorhanden ist, in dem besondere Polarkoordinatenrasterpunkte eines bestimmten Polarkoordinatenrasters, die auf Kreislinien angeordnet sind, die einen vorbestimmten Kreislinienabstand zueinander haben, und die auf ersten Strahlen angeordnet sind, die einen ersten Winkelabstand zueinander haben, sowie in Richtung des Ursprungs auf weiteren Strahlen angeordnet sind, die einen Winkelabstand zueinander haben, der größer als der erste Winkelabstand ist, als kartesische Rasterpunkte in Koordinaten des bestimmten kartesischen Koordinatensystems hinterlegt sind, sowie ein Rechner vorhanden ist, mittels dem die kartesischen Rasterpunkte mit den Bildpunkten oder den Vektoren der Bilddaten verglichen werden.

Die vorstehende Aufgabe kann bezüglich der Vorrichtung auch mit den Merkmalen des Anspruchs 3 gelöst werden. Diese sehen vor, dass ein zweiter Speicher vorhanden ist, in dem besondere Polarkoordinatenrasterpunkte eines bestimmten Polarkoordinatenrasters hinterlegt sind, die auf Kreislinien angeordnet sind, die einen vorbestimmten Kreislinienabstand zueinander haben, und die auf ersten Strahlen angeordnet sind, die einen ersten Winkelabstand zueinander haben, sowie in Richtung des Ursprungs auf weiteren Strahlen angeordnet sind, die einen Winkelabstand zueinander haben, der größer als der erste Winkelabstand ist, sowie ein Rechner vorhanden ist, mittels dem die im ersten Speicher hinterlegten Bildpunkte oder Vektoren in Polarkoordinaten transformierbar sind, und die so erhaltenen Polarkoordinatenbilddaten mit den im zweiten Speicher hinterlegten besonderen Polarkoordinatenrasterpunkte verglichen werden.

Der Begriff "Winkelabstand" bezieht sich auf Strahlen, die durch besondere Polarkoordinatenrasterpunkte verlaufen, die auf einer Kreislinie nebeneinander angeordnet sind, d.h. dass zwischen diesen besonderen Polarkoordinatenrasterpunkten innerhalb des Winkelabstands kein weiterer besonderer Polarkoordinatenrasterpunkt auf der betreffenden Kreislinie angeordnet ist.

Bezüglich des Verfahrens der eingangs genannten Art wird die vorstehend genannte Aufgabe dadurch gelöst, dass besondere Polarkoordinatenrasterpunkte eines bestimmten Polarkoordinatenrasters, die auf Kreislinien angeordnet sind, die einen vorbestimmten Kreislinienabstand zueinander haben, und die auf ersten Strahlen angeordnet sind, die einen ersten Winkelabstand zueinander haben, und welche besonderen Polarkoordinatenrasterpunkte in Richtung des Ursprungs auf weiteren Strahlen angeordnet sind, die einen Winkelabstand zueinander haben, der größer als der erste Winkelabstand ist, bestimmt werden, und
- die besonderen Polarkoordinatenrasterpunkte in Koordinaten des bestimmten kartesischen Koordinatensystems transformiert werden, und die so erhaltenen kartesischen Rasterpunkte mit den Bildpunkten oder den Vektoren der Bilddatei verglichen werden, beziehungsweise
- die Bildpunkte oder Vektoren des bestimmten kartesischen Koordinatensystems in Polarkoordinaten transformiert werden, und die so erhaltenen Polarkoordinatenbilddaten bzw. Polarkoordinatenpunkte mit den besonderen Polarkoordinatenrasterpunkten des Polarkoordinatenrasters verglichen werden.

Dadurch, dass ein zweiter Speicher vorhanden ist, in dem Polarkoordinatenpunkte eines bestimmten Polarkoordinatenrasters hinterlegt sind, die auf Kreislinien angeordnet sind, die einen vorbestimmten Kreislinienabstand zueinander haben, und die auf ersten Strahlen angeordnet sind, die einen ersten Winkelabstand zueinander haben, sowie in Richtung des Ursprungs auf weiteren Strahlen angeordnet sind, die einen Winkelabstand zueinander haben, der größer als der erste Winkelabstand ist, steht in vorteilhafter Weise ein Raster zur Verfügung, bei dem die Rasterpunkte in ähnlicher Weise angeordnet sind, wie in einem kartesischen Koordinatensystem. Das heißt, das aus den besonderen Punkten gebildete Raster weist überall eine im Wesentlichen gleichmäßige flächige Dichte auf. Im Gegensatz zu den Punkten des bestimmten Polarkoordinatenrasters, die mit zunehmender Nähe zum Ursprung des bestimmten Polarkoordinatenrasters eine zunehmende flächige Dichte aufweisen, ändert sich die flächige Dichte der besonderen Punkte des bestimmten Polarkoordinatenrasters über den Abstand vom Ursprung des Polarkoordinatenrasters nicht.

Das bestimmte Polarkoordinatenraster beziehungsweise das aus den besonderen Punkten gebildete Raster wird auf die drehbare Unterlage, welche zweckmäßigerweise als Kreisring ausgebildet ist, abgebildet. Das heißt, die Düsen des Druckkopfes können so gesteuert werden, dass sie lediglich dann Materialtröpfchen abgeben, wenn ihre Position relativ zu der Unterlage der Position eines besonderen Punktes des bestimmten Polarkoordinatenrasters entspricht. Somit erhält man ein Druckbild, das unabhängig vom Abstand zur Drehachse eine gleichmäßige Dichte aufweist.

Dadurch, dass ein Rechner vorhanden ist, mittels dem die im zweiten Speicher hinterlegten besonderen Polarkoordinatenrasterpunkte in Koordinaten des bestimmten kartesischen Koordinatensystems transformierbar sind, lässt sich das aus den besonderen Polarkoordinatenrasterpunkten gebildete Raster in dem bestimmten kartesischen Koordinatensystem abbilden. Hierdurch wird in vorteilhafter Weise erreicht, dass die Bildpunkte des bestimmten kartesischen Koordinatenrasters mit den transformierten besonderen Polarkoordinatenrasterpunkten verglichen werden können.

Somit lässt sich auf einfache Weise bestimmen, an welchen Polarkoordinatenrasterpunkten Material auf die Unterlage aufgebracht wird. Es wird nur an solchen Polarkoordinatenrasterpunkten Material auf die Unterlage aufgebracht, welche solchen besonderen Polarkoordinatenrasterpunkten entsprechen, deren in das bestimmte kartesische Koordinatenraster transformierte Punkte mit den Bildpunkten des bestimmten kartesischen Koordinatenrasters übereinstimmen. Somit werden nur die Bildpunkte des kartesischen Koordinatenrasters verwendet, deren Koordinaten mit den Koordinaten der in das kartesische Koordinatensystem transformierten besonderen Polarkoordinatenrasterpunkten übereinstimmen. Hierdurch hat ein auf die drehbare Unterlage aufgebrachtes Bild überall nahezu die gleiche Materialdichte.

Statt dass die besonderen Polarkoordinatenrasterpunkte in Koordinaten des bestimmten kartesischen Koordinatensystems transformiert werden, ist es möglich, die im ersten Speicher hinterlegten Bildpunkte in Koordinaten des bestimmten Polarkoordinatenrasters zu transformieren. Der Vergleich der Bildpunkte mit den besonderen Polarkoordinatenrasterpunkten findet dann im bestimmten Polarkoordinatenraster statt. Die durch die auf dem äußeren Kreisring liegenden Polarkoordinatenpunkte verlaufenden Strahlen des bestimmten Polarkoordinatenrasters haben zweckmäßiger Weise einen Winkelabstand, der dem Winkelabstand oder etwa einem Bruchteil des Winkelabstands entspricht, der sich ergibt, wenn der Abstand von zwei auf dem äußeren Kreisring angeordneten Polarkoordinatenpunkten dem Düsenabstand entspricht.

Bei einer bevorzugten Ausführungsform sind im ersten Speicher Bilddaten für eine erste und für eine zweite Schicht eines aus mindestens zwei Materialtröpfchen-Schichten herzustellenden Schichtstapels abgelegt, wobei im zweiten Speicher ein erster und ein zweiter Satz mit besonderen Polarkoordinatenrasterpunkten hinterlegt ist, wobei bei diesen Sätzen die Polarkoordinatenrasterpunkte unterschiedlich in dem bestimmten Polarkoordinatenraster angeordnet sind, und wobei mit Hilfe des Rechners
- die Polarkoordinatenrasterpunkte des ersten Satzes in Koordinaten des bestimmten kartesischen Koordinatensystems transformierbar sind und die so erhaltenen ersten kartesischen Rasterpunkte mit den Bildpunkten oder den Vektoren der Bilddaten der ersten Schicht vergleichbar sind, und
- die Polarkoordinatenrasterpunkte des zweiten Satzes in Koordinaten des bestimmten kartesischen Koordinatensystems transformierbar sind und die so erhaltenen zweiten kartesischen Rasterpunkte mit den Bildpunkten oder den Vektoren der Bilddaten der zweiten Schicht verglichen werden
oder wobei mit Hilfe des Rechners
- die im ersten Speicher für die erste Schicht hinterlegten Bildpunkte oder Vektoren in Polarkoordinaten transformierbar sind und die so erhaltenen ersten Polarkoordinatenbilddaten mit den im zweiten Speicher hinterlegten besonderen Polarkoordinatenrasterpunkten des ersten Satzes verglichen werden, und
- die im ersten Speicher für die zweite Schicht hinterlegten Bildpunkte oder Vektoren in Polarkoordinaten transformierbar sind und die so erhaltenen zweiten Polarkoordinatenbilddaten mit den im zweiten Speicher hinterlegten besonderen Polarkoordinatenrasterpunkten des zweiten Satzes verglichen werden.

Die Stellen, an denen die besonderen Polarkoordinatenrasterpunkte angeordnet sind, werden also bei den einzelnen Materialtröpfchen-Schichten unterschiedlich gewählt. Dies hat den Vorteil, dass auf Kreislinien, auf denen sich aufgrund des bestimmten Polarkoordinatenrasters, in dem die dem besonderen Polarkoordinatenrasterpunkte angeordnet sind, zwischen in Umfangsrichtung der Kreislinie zueinander benachbarten besonderen Polarkoordinatenrasterpunkten Lücken oder Löcher im Schichtstapel ergeben, diese bei aufeinanderliegenden Schichten nicht genau übereinander liegen, sondern in Umfangsrichtung zueinander versetzt sind. Somit wird das auf die Unterlage bzw. den Schichtstapel aufgebrachte Material in Umfangsrichtung gleichmäßiger verteilt und es wird der Ausbildung von Kanälen, die den Schichtstapel an den Löchern oder Lücken normal zur Ebene der Unterlage durchsetzen, entgegengewirkt. Die unterschiedlichen Sätze mit besonderen Polarkoordinatenrasterpunkten können beispielsweise dadurch erzeugt werden, dass die Polarkoordinatenrasterpunkte für die einzelnen Schichten um den Ursprung des bestimmten Polarkoordinatenrasters bzw. um die Drehachse um den Winkelschritt, um den die Polarkoordinatenrasterpunkte in Umfangsrichtung der Kreislinien zueinander versetzt sind, oder um mehrere Winkelschritte relativ zueinander verdreht werden. Es ist aber auch denkbar, die Anordnung der besonderen Polarkoordinatenrasterpunkte an einer durch den Ursprung verlaufenden Geraden zu spiegeln.

In vorteilhafter Weise sind die Düsen derart angeordnet, dass eine durch mindestens zwei Düsen verlaufende Gerade parallel zu einem Strahl des Polarkoordinatenrasters verläuft, wobei die durch die Düsen verlaufende Gerade bevorzugt die Drehachse oder deren gerade Verlängerung schneidet. Hierdurch lässt sich auf einfache Weise mittels der Düsen ein Bild auf eine um eine Drehachse drehbare Unterlage aufbringen, dessen Bildpunkte im Polarkoordinatenraster angeordnet sind. Insbesondere lassen sich problemlos mehrere Druckköpfe in radialer Richtung hintereinander anordnen, sodass auf einfache Weise der Bereich der Unterlage, auf dem Material aufgebracht werden soll, vergrößert wird. So lassen sich beispielsweise vier Druckköpfe hintereinander anordnen, wodurch ein kreisringförmiger Bereich mit Material versehen werden kann, der viermal so groß ist, wie der Bereich, der von einem Druckkopf mit Material versehen werden kann. Die Düsen können auf einer einzigen, parallel zu einem Strahl des Polarkoordinatenrasters verlaufenden Geraden oder auf zwei parallel zu demselben Strahl des Polarkoordinatenrasters verlaufenden Geraden angeordnet sein, die im selben Vertikalabstand zur Unterlage angeordnet sind. In dem zuletzt genannten Fall sind die auf der einen Graden angeordneten Düsen bevorzugt zu den auf der anderen Gerade angeordneten Düsen auf Lücke versetzt. Diese ermöglicht eine dichte Anordnung der Düsen.

In vorteilhafter Weise entspricht der Kreislinienabstand des bestimmten Polarkoordinatenrasters dem Abstand zweier Düsen, wenn diese in einer Reihe parallel zu einem Strahl des Polarkoordinatenrasters angeordnet sind. Der Düsenabstand ist so gewählt, dass die von ihr abgegebene Materialtröpfchen eine Linie erzeugen, die eine gleichmäßige Dichte hat.

In vorteilhafter Weise ist der Winkelabstand der im zweiten Speicher hinterlegten besonderen Punkte des Polarkoordinatenrasters derart gewählt, dass der Abstand von zwei auf derselben Kreislinie nebeneinander liegenden besonderen Punkten des Polarkoordinatenrasters wenigsten einem Bruchteil, vorzugsweise jedoch dem Einfachen des Düsenabstands entspricht, wobei der Winkelabstand so gewählt ist, dass er einem Stammbruchteil eines Vollkreises bzw. einer Umdrehung entspricht. Hierdurch kann auf einfache Weise die Dichte des auf die Unterlage aufgebrachten Materials beeinflusst werden. Allerdings muss beachtet werden, dass der Abstand so zu wählen ist, dass er einem Stammbruchteil eines Vollkreises entspricht. Hierdurch wird erreicht, dass nach einer vollständigen Umdrehung der Unterlage um die Drehachse die Polarkoordinatenrasterpunkte sich wieder exakt in ihrer Ausgangsposition befinden, wodurch es nicht erforderlich ist, die Unterlage in einem besonderen Schritt in ihre Ausgangslage zu versetzen. Dies wirkt sich sehr vorteilhaft auf die Bearbeitungszeit aus. Ein Versatz, durch den Unschärfen entstehen würden, tritt nicht auf.

Sehr vorteilhaft ist eine Ausführungsform, bei welcher der Winkelabstand der weiteren Strahlen des bestimmten Polarkoordinatenrasters einem ganzzahligen Vielfachen des Winkelabstandes der ersten Strahlen entspricht. Hierdurch lassen sich die besonderen Punkte des Polarkoordinatenrasters sehr genau platzieren.

Bei einer bevorzugten Ausgestaltung sind mindestens zwei Polarkoordinatenrasterpunkten Materialtröpfchen unterschiedlichen Volumens zugeordnet, wobei in dem zweiten Speicher für die einzelnen Polarkoordinatenrasterpunkte jeweils eine Volumeninformation für ein an dem betreffenden Polarkoordinatenrasterpunkt abzugebendes Materialtröpfchen abgelegt ist, und wobei die Vorrichtung derart ausgestaltet ist, dass die Materialtröpfchen an den zu bedruckenden Stellen jeweils mit einem Volumen aufgetragen werden, das der im zweiten Speicher abgelegten Volumeninformation des betreffenden Polarkoordinatenrasterpunkts entspricht. Dadurch können die Abmessungen von zwischen in Umfangsrichtung der Kreislinie zueinander benachbarten besonderen Polarkoordinatenrasterpunkten befindlichen Lücken oder Löcher im Schicht-stapel reduziert oder die Lücken bzw. Löcher sogar ganz vermieden werden. Durch die unterschiedlichen Volumina der Materialtröpfchen ergeben sich unterschiedlich große Materialtröpfchen.

Vorteilhaft ist, wenn auf einer ersten Kreislinie des Polarkoordinatenrasters erste Polarkoordinatenrasterpunkte und auf einer weiteren Kreislinie des Polarkoordinatenrasters weitere Polarkoordinatenrasterpunkte angeordnet sind, wenn der Durchmesser der weiteren Kreislinie kleiner ist als der Durchmesser der ersten Kreislinie, und wenn die im zweiten Speicher abgelegten Volumeninformationen derart gewählt sind, dass die Summe der den Polarkoordinatenrasterpunkten der weiteren Kreislinie zugeordneten Volumina kleiner ist als die Summe der den Polarkoordinatenrasterpunkten der ersten Kreislinie zugeordneten Volumina. Bevorzugt entspricht das Verhältnis dieser Summen etwa dem Verhältnis der Durchmesser der Kreislinien. Dies ermöglicht einen besonders gleichmäßigen Materialauftrag.

Wenngleich, wie vorstehend ausgeführt wurde, mittels der vorliegenden Offenbarung auch ein sehr homogenes Druckbild erzeugt werden kann, das heißt, die Offenbarung bei Druckern Anwendung finden kann, welche ein Druckbild auf eine um eine Drehachse drehbare Unterlage drucken, so ist die Anwendung der Offenbarung insbesondere bei Druckern sehr vorteilhaft, mittels welcher durch schichtweisen Materialauftrag dreidimensionale Gegenstände hergestellt werden können. Denn insbesondere bei solchen Druckern wirkt sich die durch die kontinuierliche Drehbewegung des Drucktischs erreichbare Zeitersparnis sehr deutlich aus. Des Weiteren lassen sich bei Anwendung der Offenbarung die Druckköpfe fest montieren, wodurch die Druckvorrichtung robust wird, eine sehr hohe Stitching-Genauigkeit aufweist und eine hohe Zuverlässigkeit hat.

Des Weiteren ist sehr vorteilhaft, dass die Anordnung der besonderen Polarkoordinatenrasterpunkte von der Geometrie der Druckvorrichtung, das heißt insbesondere von der sich um die Drehachse drehbaren Unterlage sowie der Druckkopfanordnung abhängt. Hierdurch braucht die Berechnung der besonderen Polarkoordinatenrasterpunkte für eine Druckvorrichtung nur einmal vorgenommen werden. Die besonderen Polarkoordinatenrasterpunkte lassen sich somit dauerhaft in dem zweiten Speicher hinterlegen. Hierdurch wird Rechenaufwand vermieden, was sich sehr vorteilhaft auf die Druckgeschwindigkeit auswirkt.

Erwähnt werden soll noch, dass die vorgegebenen Bilddaten als Bildpunkte eines bestimmten kartesischen Koordinatenrasters, dessen Koordinatenlinien einen Rasterabstand zueinander haben, oder als Vektoren vorliegen können.

Weitere Einzelheiten, Merkmale und Vorteile der vorliegenden Offenbarung ergeben sich aus der nachfolgenden Beschreibung eines besonderen Ausführungsbeispiels unter Bezugnahme auf die Zeichnung. Es zeigt zum Teil stärker schematisiert:
- Fig. 1: eine perspektivische Ansicht eines Ausführungsbeispiels einer Vorrichtung zum schichtweisen Herstellen dreidimensionaler Formgegenstände, die einen Drehteller aufweist, auf den eine Anzahl von Materialschichten für die Formgegenstände aufgebracht sind,
- Fig. 2: eine Darstellung ähnlich Fig. 1, nachdem weitere Materialschichten aufgebracht wurden und der Drehteller gegenüber Fig. 1 abgesenkt wurde,
- Fig. 3: eine in einem durch besondere Polarkoordinatenrasterpunkte gebildeten Polarkoordinatenraster angeordnete Abbildung,
- Fig. 4: das entsprechende gedruckte Bild,
- Fig. 5: eine grafische Darstellung eines Polarkoordinatenrasters, das eine Vielzahl von Polarkoordinatenrasterpunkten aufweist, die auf zu einem Ursprung konzentrischen, gedachten Kreislinien und auf einer Vielzahl von radial zum Ursprung verlaufenden, gedachten Strahlen angeordnet sind,
- Fig. 6: eine grafische Darstellung von besonderen Polarkoordinatenrasterpunkten des in Fig. 5 dargestellten Polarkoordinatenrasters,
- Fig. 7: eine Darstellung ähnlich Fig. 6, wobei jedoch die besonderen Polarkoordinatenrasterpunkten als Kreisflächen dargestellt sind, die den die den Materialtröpfchen entsprechen, welche die Vorrichtung beim Drucken der besonderen Polarkoordinatenrasterpunkte auf eine Unterlage abgibt,
- Fig. 8: eine Teildarstellung von Fig. 7, welche die auf die Unterlage abgegebenen Materialtröpfchen für die auf einer ersten Kreislinie angeordneten besonderen Polarkoordinatenrasterpunkte zeigt,
- Fig. 9: eine Teildarstellung von Fig. 7, welche die auf die Unterlage abgegebenen Materialtröpfchen für die auf einer zweiten Kreislinie angeordneten besonderen Polarkoordinatenrasterpunkte zeigt, wobei der Durchmesser der zweiten Kreislinie kleiner ist als der Durchmesser der ersten Kreislinie,
- Fig. 10: eine Teildarstellung von Fig. 7, welche die auf die Unterlage abgegebenen Materialtröpfchen für die auf einer dritten Kreislinie angeordneten besonderen Polarkoordinatenrasterpunkte zeigt, wobei der Durchmesser der dritten Kreislinie kleiner ist als der Durchmesser der zweiten Kreislinie,
- Fig. 11: eine Teildarstellung von Fig. 7, welche die auf die Unterlage abgegebenen Materialtröpfchen für die auf einer vierten Kreislinie angeordneten besonderen Polarkoordinatenrasterpunkte zeigt, wobei der Durchmesser der vierten Kreislinie kleiner ist als der Durchmesser der dritten Kreislinie,
- Fig. 12: eine Teildarstellung von Fig. 7, welche die auf die Unterlage abgegebenen Materialtröpfchen für die auf einer fünften Kreislinie angeordneten besonderen Polarkoordinatenrasterpunkte zeigt, wobei der Durchmesser der fünfte Kreislinie kleiner ist als der Durchmesser der vierten Kreislinie,
- Fig. 13: eine Teildarstellung von Fig. 7, welche die auf die Unterlage abgegebenen Materialtröpfchen für die auf einer sechsten Kreislinie angeordneten besonderen Polarkoordinatenrasterpunkte zeigt, wobei der Durchmesser der sechste Kreislinie kleiner ist als der Durchmesser der fünften Kreislinie,
- Fig. 14: eine Teildarstellung von Fig. 7, welche die auf die Unterlage abgegebenen Materialtröpfchen für die auf einer siebten Kreislinie angeordneten besonderen Polarkoordinatenrasterpunkte zeigt, wobei der Durchmesser der siebten Kreislinie kleiner ist als der Durchmesser der sechsten Kreislinie,
- Fig. 15: eine Darstellung ähnlich Fig. 7, wobei jedoch die besonderen Polarkoordinatenrasterpunkten anders im Polarkoordinatenraster angeordnet sind als in Fig. 7,
- Fig. 16: einen Schichtstapel, der zwei gedruckte Schichten aufweist, wobei die besonderen Polarkoordinatenrasterpunkte der unteren Schicht schraffiert und die besonderen Polarkoordinatenrasterpunkte der oberen Schicht unschraffiert dargestellt sind, und
- Fig. 17: eine Darstellung von auf eine Unterlage abgegebenen Materialtröpfchen unterschiedlichen Durchmessers, die in einem bestimmten Polarkoordinatenraster angeordnet sind, das durch Kreislinien, Strahlen und schwarze bzw. weiße Polarkoordinatenrasterpunkte markiert ist.

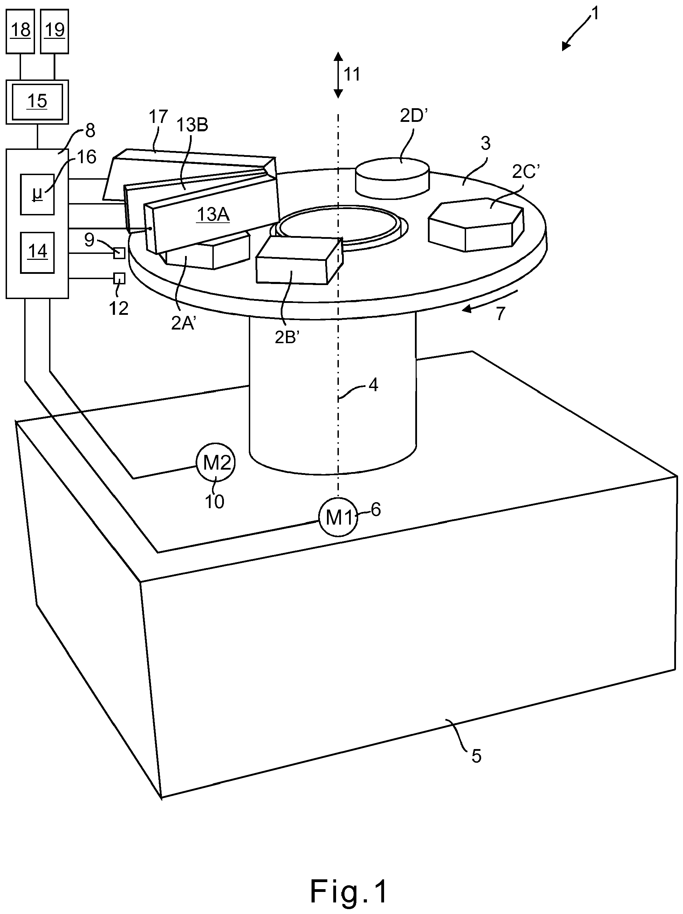

Eine in Fig. 1 im Ganzen mit 1 bezeichnete Vorrichtung zum Herstellen dreidimensionaler Formgegenstände 2A, 2B, 2C, 2D mittels schichtweisem Materialauftrag weist eine ebene Unterlage 3 auf, die sich in einer Horizontalebene erstreckt. Auf der Unterlage 3 sind Schichtstapel 2A', 2B', 2C', 2D' für mehrere Formgegenstände 2A, 2B, 2C, 2D aufbringbar, die jeweils eine Vielzahl von Materialschichten aufweisen.

Die Unterlage 3 ist als kreisringförmiger Drehteller ausgestaltet, der um eine vertikale Drehachse 4 an einer ortsfesten Halterung 5 verdrehbar gelagert ist. Die Halterung 5 hat an ihrer Unterseite eine Standfläche, mittels der sie beispielsweise auf einer Tischplatte oder auf dem Boden eines Raums aufstellbar ist.

Die Unterlage 3 steht mit einer ersten Positioniereinrichtung in Antriebsverbindung, die einen ersten Antriebsmotor 6 hat, mittels welchem die Unterlage 3 in Richtung des Pfeils 7 drehantreibbar und entsprechend einem von einer Ansteuereinrichtung 8 bereitgestellten Drehlagen-Sollwertsignal positionierbar ist. Der erste Antriebsmotor 6 ist zu diesem Zweck mit einem in die Ansteuereinrichtung 8 integrierten ersten Lageregler verbunden, der einen Encoder 9 zur Erfassung der Drehlage der Unterlage 3 aufweist. Der Lageregler, beziehungsweise der Encoder 9 können als Impulsgeber ausgebildet sein. Mit Hilfe der ersten Positioniereinrichtung kann die Unterlage 3 kontinuierlich, mit hoher Drehgeschwindigkeit und ohne anzuhalten über nahezu beliebige Winkel von mehr als 360° relativ zu der Halterung 5 um die Drehachse 4 gedreht werden.

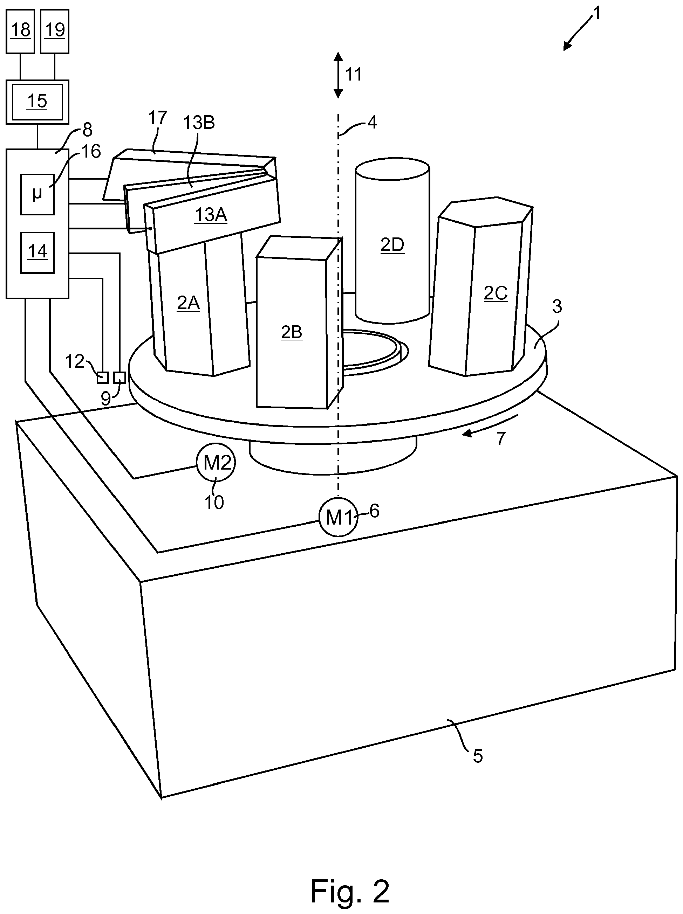

Die Unterlage 3 steht außerdem mit einer zweiten Positioniereinrichtung in Antriebsverbindung, die einen zweiten Antriebsmotor 10 hat, mittels welchem die Unterlage 3 in Richtung des Doppelpfeils 11 relativ zu der Halterung 5 auf und ab verschiebbar und entsprechend einem von der Ansteuereinrichtung 8 bereitgestellten Höhenlagen-Sollwertsignal positionierbar ist (Fig. 1 und 2). Die Positionierung kann schrittweise oder kontinuierlich erfolgen. Der zweite Antriebsmotor 10 ist zu diesem Zweck mit einem in die Ansteuereinrichtung 8 integrierten zweiten Lageregler verbunden, der einen Lagesensor 12 zur Erfassung der Höhenlage der Unterlage 3 aufweist.

Die Vorrichtung 1 hat zwei ortsfest an der Halterung 5 angeordnete Druckkopfanordnungen 13A, 13B, die jeweils aus vier in radialer Richtung hintereinander angeordneten Druckköpfen bestehen, welche jeweils eine in der Zeichnung nicht näher dargestellte Düsenanordnung mit einer Vielzahl von mit steuerbaren Ventilen versehenen Düsen aufweist, aus denen jeweils Materialtröpfchen eines fließfähigen Materials, wie zum Beispiel eines Polymers, Klebers, Binders, etc. abgebbar sind. Die Düsen der einzelnen Düsenanordnungen sind jeweils in einer parallel zu der Ebene der Unterlage 3 verlaufenden Reihe angeordnet und mit ihrer Düsenöffnung der Unterlage 3 zugewandt. Die Reihen, in denen die Düsen der einzelnen Düsenanordnungen angeordnet sind, erstrecken sich jeweils etwa radial zur Drehachse 4 der Unterlage 3. Jede Düsenanordnung ist jeweils mit einem in der Zeichnung nicht näher dargestellten Reservoir für einen fließfähigen Materialvorrat verbunden. Die Reservoirs können mit unterschiedlichen Materialien befüllt sein. Diese können beispielsweise zur Herstellung von Zweikomponenten-Formgegenständen eine unterschiedliche Farbe oder Materialeigenschaften haben. Es ist auch eine Mehrfarbenversion möglich.

Die Positioniereinrichtungen und die Druckkopfdüsen sind mittels der Ansteuereinrichtung 8 derart ansteuerbar, dass die Formgegenstände 2A, 2B, 2C, 2D durch schichtweisen Materialauftrag herstellbar sind. Die Ansteuereinrichtung 8 weist zu diesem Zweck einen Druckpuffer 14 auf, in dem Druckdaten für eine mit Hilfe der Druckanordnungen 13A, 13B auf die Unterlage 3, eine darauf befindliche Materialschicht, einen auf der Unterlage 3 befindlichen Schichtstapel mit mehreren Materialschichten und/oder einen auf der Unterlage, der Materialschicht oder dem Schichtstapel angeordneten Gegenstand aufzubringende Materialschicht ablegbar sind.

Die Druckdaten sind in Form einer Bildpunkte-Matrix in dem Druckpuffer 14 ablegbar, die eine Vielzahl von Bildpunkten aufweist, die entsprechend in einem Polarkoordinatensystem mit mehreren Kreislinien und mehreren radialen Strahlen angeordnet sind. Die Kreislinien sind konzentrisch zur Drehachse 4 der Unterlage 3 angeordnet und weisen jeweils eine vorbestimmte Anzahl von Bildpunkten auf, die in einem Winkelraster bezüglich der Drehachse 4 zueinander versetzt sind. Zeilen, die weiter von der Drehachse 4 der Unterlage 3 entfernt sind, haben eine größere Anzahl von Bildpunkten als Zeilen, die näher an der Drehachse 4 angeordnet sind. Jede Druckkopfanordnung 13A, 13B hat für jede Kreislinie jeweils eine Düse.

Für jeden Bildpunkt ist in dem Druckpuffer 14 jeweils für jede Druckkopfanordnung 13A, 13B eine Information ablegbar, die einen ersten Wert (z.B. "1") aufweist, wenn die betreffende Düse der betreffenden Druckkopfanordnung 13A, 13B an der dem Bildpunkt zugeordneten Stelle der herzustellenden Materialschicht ein Materialtröpfchen abgeben soll. Wenn eine Düse der Druckkopfanordnung 13A, 13B an der dem Bildpunkt zugeordneten Stelle der Materialschicht kein Materialtröpfchen abgeben soll, weist die in dem Druckpuffer 14 für diesen Bildpunkt abgelegte Information einen zweiten Wert auf (z.B. "0").

Zum Laden der Bildpunkte-Matrix in den Druckpuffer 14 ist die Ansteuereinrichtung 8 mit einem übergeordneten Computer 15, wie zum Beispiel einem PC, verbunden, in dem Geometriedaten für die Formgegenstände 2A, 2B, 2C, 2D abgelegt sind. Die Geometriedaten können beispielsweise mittels einer CAD-Software bereitgestellt werden, die auf dem Computer 15 ablaufbar ist. Auf dem Computer 15 ist ferner eine Software ausführbar, welche die Geometriedaten aufbereitet und daraus die Druckdaten für die einzelnen Schichten der Formgegenstände 2A, 2B, 2C, 2D generiert. Mit Hilfe der Software wird die Bildpunkte-Matrix derart erzeugt, dass Verzerrungen an Stellen, an denen die in einem ersten Speicher 18 hinterlegten in kartesischen Koordinaten vorliegenden Geometrie der Formgegenstände 2A, 2B, 2C, 2D von der Geometrie abweicht, die durch die in Polarkoordinaten umgerechnete kartesische Koordinaten gebildet wird, möglichst gering sind.

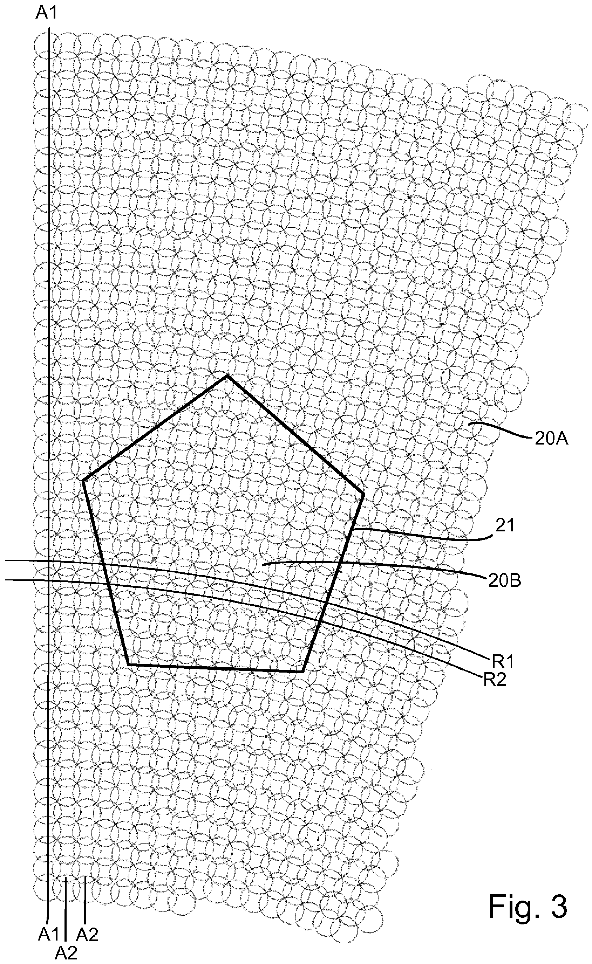

Dies geschieht in der Weise, dass besondere Polarkoordinatenrasterpunkte 20A, 20B des Polarkoordinatenrasters bestimmt werden, die auf Kreislinien angeordnet sind, die einen vorbestimmten Kreislinienabstand zueinander haben. In Fig. 3 ist erkennbar, dass die Polarkoordinatenrasterpunkte 20b einen geringeren Abstand zum Ursprung bzw. zum Mittelpunkt der Kreislinien haben als die Polarkoordinatenrasterpunkte 20A. Die Punkte 20A sind auf ersten Strahlen A1 angeordnet, die einen ersten Winkelabstand zueinander haben. In Fig. 3 ist aus Gründen der Übersichtlichkeit nur ein erster Strahl A1 eingezeichnet. Die Punkte 20B sind auf zweiten Strahlen A2 angeordnet, die einen zweiten Winkelabstand zueinander haben, der größer ist als der erste Winkelabstand. Das heißt, die Polarkoordinatenrasterpunkte sind in Richtung des Ursprungs auf weiteren Strahlen angeordnet, die einen Winkelabstand zueinander haben, der größer als der erste Winkelabstand ist. Mit Abnahme der Entfernung vom Ursprung des Polarkoordinatenrasters nimmt der Winkelabstand zu, wodurch erreicht werden kann, dass der Abstand der auf derselben Kreislinie angeordneten Polarkoordinatenrasterpunkte stets gleich ist.

Der Abstand der Kreislinien entspricht dem Winkelabstand der Düsen der Druccköpfe 13A, 13B. Der Winkelabstand ist variabel und wird so gewählt, dass der Abstand der auf einer bestimmten Kreislinie angeordneten besonderen Polarkoordinatenrasterpunkte 20A, 20B etwa dem Abstand der Düsen entspricht. Das heißt, der Abstand der besonderen Polarkoordinatenrasterpunkte 20A, 20B, die auf der der Drehachse 4 am nächsten kommenden Kreislinie angeordnet sind, ist größer als der Winkelabstand der besonderen Polarkoordinatenrasterpunkte 20A, 20B, die auf der der Drehachse 4 am weitesten entfernten Kreislinie angeordnet sind. Für jeden Kreisring lässt sich ein idealer Winkelabstand berechnen, der die Bedingung erfüllt, dass der Abstand der besonderen auf dieser Kreislinie angeordneten Polarkoordinatenrasterpunkte 20A, 20B in etwa dem Abstand der Düsen zueinander entspricht. Sofern der Abstand der besonderen Polarkoordinatenrasterpunkte 20A, 20B auf der bestimmten Kreislinie nicht einem ganzzahligen Bruchteil eines Vollkreises bzw. einer Umdrehung entspricht, wird der Winkelabstand durch Rundung so angepasst, dass er einem ganzzahligen Bruchteil des Vollkreises bzw. der Umdrehung entspricht. Das durch die besonderen Polarkoordinatenrasterpunkte 20A, 20B gebildete Polarkoordinatenraster wird in einem zweiten Speicher 19 hinterlegt.

Mittels des Rechners 15 werden die Polarkoordinaten der besonderen Polarkoordinatenrasterpunkte 20A, 20B in kartesische Koordinaten umgerechnet. Anschließend werden die im ersten Speicher 18 hinterlegten kartesischen Koordinaten der Bilddaten mit den kartesischen Koordinaten der umgerechneten besonderen Polarkoordinatenrasterpunkte 20A, 20B verglichen. Die Bildpunkte, deren kartesischen Koordinaten mit den kartesischen Koordinaten der umgerechneten besonderen Polarkoordinatenrasterpunkten 20A, 20B übereinstimmen, sollen gedruckt werden. Die Bildpunkte, deren kartesische Koordinaten nicht mit den kartesischen Koordinaten der umgerechneten besonderen Polarkoordinatenrasterpunkte 20A, 20B übereinstimmen, sollen nicht gedruckt werden. Dementsprechend werden die betreffenden besonderen Polarkoordinatenrasterpunkte 20A, 20B markiert. Die so erhaltenen Druckdaten können aus dem Computer 15 in den Druckpuffer geladen werden.

In Figur 3 ist ein aus besonderen Polarkoordinatenrasterpunkten 20A, 20B bestehendes Raster dargestellt. Das Raster weist radial verlaufende Strahlen A1, A2 sowie Kreisringe R1, R2 auf. Die besonderen Polarkoordinatenrasterpunkte 20A, 20B sind auf einer Kreislinie R1, R2 jeweils in einem Abstand zueinander angeordnet, der dem Abstand der Düsen entspricht. Denselben Abstand weisen die besonderen Polarkoordinatenrasterpunkte 20A, 20B in radialer Richtung auf. Auf dem durch die besonderen Polarkoordinatenrasterpunkte 20A, 20B gebildeten Raster ist eine Figur 21 abgebildet. Liegt die Figur 21 in vektorisierter Form vor, kann geprüft werden, welche Polarkoordinaten, das heißt, besonderen Polarkoordinatenrasterpunkte 20A, 20B innerhalb oder außerhalb der Bildkonturen liegen. Zur Prüfung kann auf einen Standardalgorithmus graphischer Programme zugegriffen werden. Alle innerhalb der Bildkontur befindlichen besonderen Polarkoordinatenrasterpunkte 20B, die den Mittelpunkt der als Kreise dargestellten Materialtröpfchen bilden, werden mit einem Materialtropfen versehen. Alle sich außerhalb der Bildkontur befindenden besonderen Polarkoordinatenrasterpunkte 20A werden nicht mit einem Materialtropfen versehen.

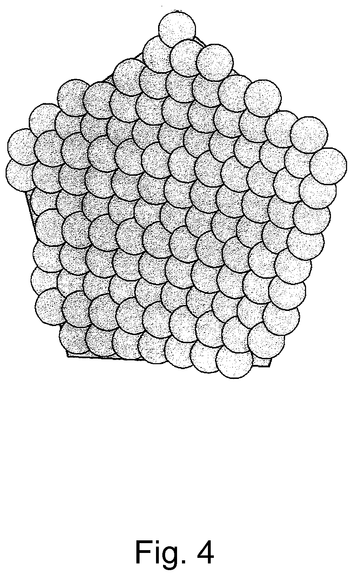

Hierdurch ergibt sich das in Figur 4 dargestellte Bild.

Die Ansteuereinrichtung 8 hat ferner einen mit dem Druckpuffer 14 verbundenen Mikroprozessor 16, auf dem ein Betriebsprogramm ablaufbar ist, mittels welchem die erste und zweite Positioniereinrichtung und die Düsen der Druckköpfe 13A, 13B derart steuerbar sind, dass die Formgegenstände durch schichtweisen Materialauftrag herstellbar sind. Das Betriebsprogramm ist in einem in der Zeichnung nicht näher dargestellten Speicher der Ansteuereinrichtung 8 abgelegt. Die Ansteuereinrichtung 8 ist über Daten- bzw. Steuerleitungen mit den Druckköpfen 13A, 13B und den Positioniereinrichtungen verbunden.

Die Vorrichtung 1 weist ferner eine Fixiereinrichtung 17 auf, die zum Verfestigen bzw. zum Vernetzen einer auf die Unterlage 3, einer darauf befindlichen Materialschicht und/oder einen auf der Unterlage 3 befindlichen Schichtstapel mit mehreren mittels der Druckköpfe 13A, 13B aufgebrachten Materialschichten eine in der Zeichnung nicht näher dargestellte UV-Lichtquelle aufweist, die mit ihrer Abstrahlseite der Unterlage 3 zugewandt ist. Anstelle der UV-Lichtquelle kann auch eine andere Fixierquelle vorgesehen sein. Die Fixiereinrichtung 17 ist ortsfest in Bezug zu der Halterung 3 angeordnet und mit ihrer Längserstreckung etwa radial zur Drehachse 4 ausgerichtet (Fig. 3).

Nachfolgend wird erläutert, wie die Formgegenstände 2A, 2B, 2C, 2D mittels der Vorrichtung 1 schichtweise hergestellt werden.

Die Unterlage 3 wird mit Hilfe der zweiten Positioniereinrichtung und mit Hilfe des Lagesensors 12 in einem vorbestimmten Abstand zu den Düsenanordnungen der Druckköpfe 13A, 13B positioniert. Der Abstand wird derart gewählt, dass mittels der Düsenanordnungen Materialtröpfchen für eine erste Materialschicht auf die Unterlage 3 aufgetragen werden können. Außerdem wird Unterlage 3 mit Hilfe der ersten Positioniereinrichtung und mit Hilfe des Encoders 9 in eine vorbestimmte Drehlage in Bezug zu der Halterung 5 gebracht. Aus dem Computer 15 werden Druckdaten für eine erste zu erzeugende Materialschicht in den Druckpuffer 14 geladen.

Nun wird die Unterlage 3 in Richtung des Pfeils 7 mit einer vorbestimmten, konstanten, aber wählbaren Winkelgeschwindigkeit relativ zu der Halterung 5 in Drehbewegung versetzt, während mit Hilfe der Düsenanordnungen der Druckköpfe 13A, 13B an den Stellen, an denen das jeweils den Druckköpfen 13A, 13B zugeordnete Material auf die Unterlage aufgetragen werden soll, jeweils Materialtröpfchen abgegeben werden, um eine erste Materialschicht auf der Unterlage 3 zu erzeugen. Die Abgabe der Materialtröpfchen erfolgt in Abhängigkeit von den im Druckpuffer 14 abgelegten Daten und in Abhängigkeit vom Messsignal des Encoders 9.

Die auf die Unterlage 3 aufgetragene Materialschicht wird mittels der Fixiereinrichtung 17 durch Bestrahlen mit UV-Licht oder der Energie einer anderen Energiequelle verfestigt. Nachdem die erste Materialschicht vollständig aufgetragen wurde, wird die Unterlage 3 mit der vorbestimmten Winkelgeschwindigkeit weiter um die Drehachse 4 gedreht. Wenn sich die Düsenanordnungen der Druckköpfe 13A, 13B über einem Segment der Unterlage 3 befinden, in dem keine Materialtröpfchen abgegeben werden sollen, werden die Druckdaten für eine weitere Materialschicht, die auf die bereits fertig gestellte erste Materialschicht aufgetragen werden soll, aus dem Computer 15 in den Druckpuffer 14 geladen.

Es ist auch denkbar, dass die Ansteuereinrichtung 8 mehrere Druckpuffer 14 aufweist, von denen jeweils einer Druckdaten für eine aktuell herzustellende Materialschicht enthält. Während der Herstellung dieser Materialschicht können dann die Druckdaten für eine weitere, zu einem späteren Zeitpunkt herzustellende Materialschicht in einen weiteren Druckpuffer eingelesen werden, so dass diese Druckdaten nach Fertigstellung der gerade in Bearbeitung befindlichen Materialschicht gleich für die Herstellung einer weiteren Materialschicht zur Verfügung stehen.

Sobald die erste Materialschicht fertig gestellt ist, wird die Unterlage 3 mit Hilfe der zweiten Positioniereinrichtung um die Dicke der ersten Materialschicht abgesenkt, so dass die Düsenanordnungen nun in dem vorbestimmten Abstand zu der der Unterlage 3 abgewandten Oberfläche der ersten Materialschicht angeordnet ist. Die Absenkung kann aber auch kontinuierlich erfolgen.

Während die Unterlage 3 weiterhin um die Drehachse 4 gedreht wird, werden mit Hilfe der Düsenanordnungen der Druckköpfe 13A, 13B an den Stellen, an denen das den einzelnen Druckköpfen 13A, 13B zugeordnete Material auf die erste Materialschicht aufgetragen werden soll, jeweils Materialtröpfchen abgegeben, um die weitere Materialschicht aufzutragen. Die Abgabe der Materialtröpfchen erfolgt dabei wiederum in Abhängigkeit von den im Druckpuffer 14 abgelegten Daten und in Abhängigkeit vom Messsignal des Encoders 9.

Die vorstehend genannten Schritte werden in entsprechender Weise zum Auftragen weiterer Materialschichten wiederholt, bis die Formgegenstände 2A, 2B, 2C, 2D fertig gestellt sind. Danach werden die Formgegenstände 2A, 2B, 2C, 2D von der Unterlage entfernt und die Unterlage wird in ihre Ausgangslage zurückpositioniert, um bei Bedarf weitere Formgegenstände 2A, 2B, 2C, 2D herzustellen.

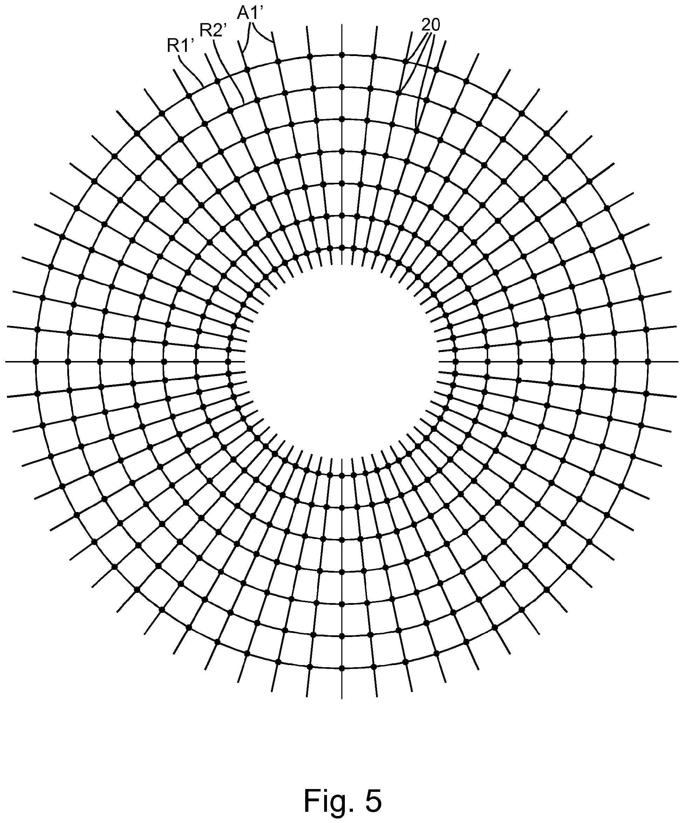

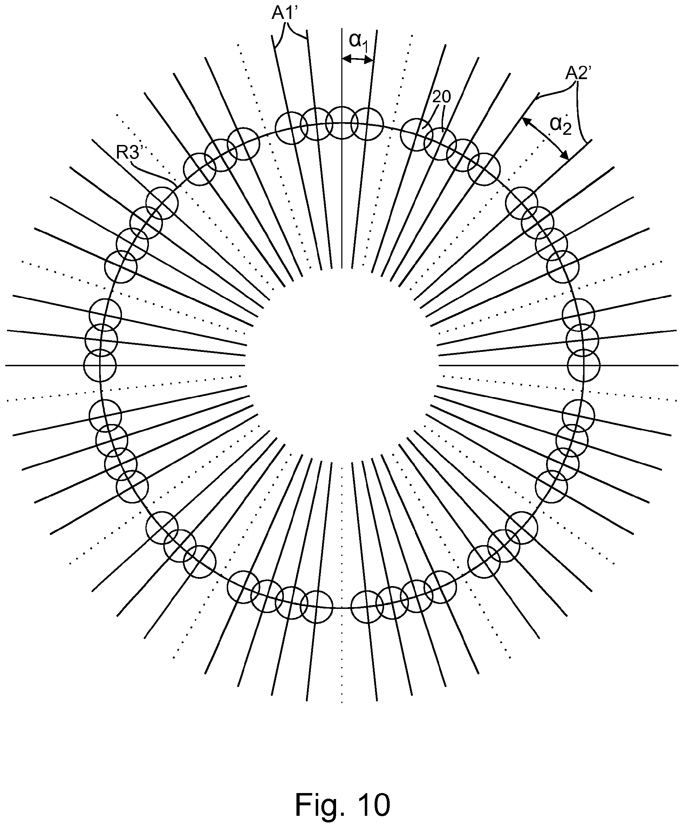

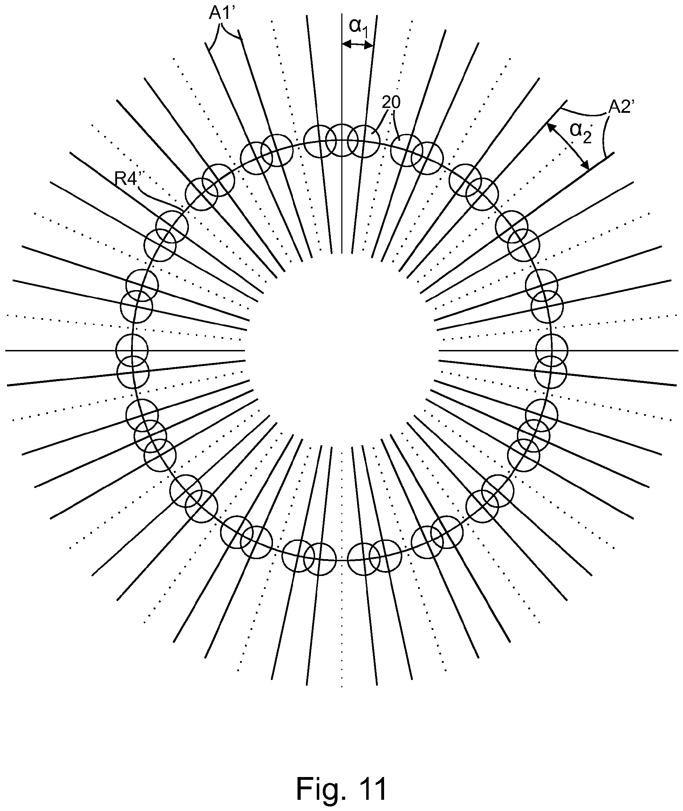

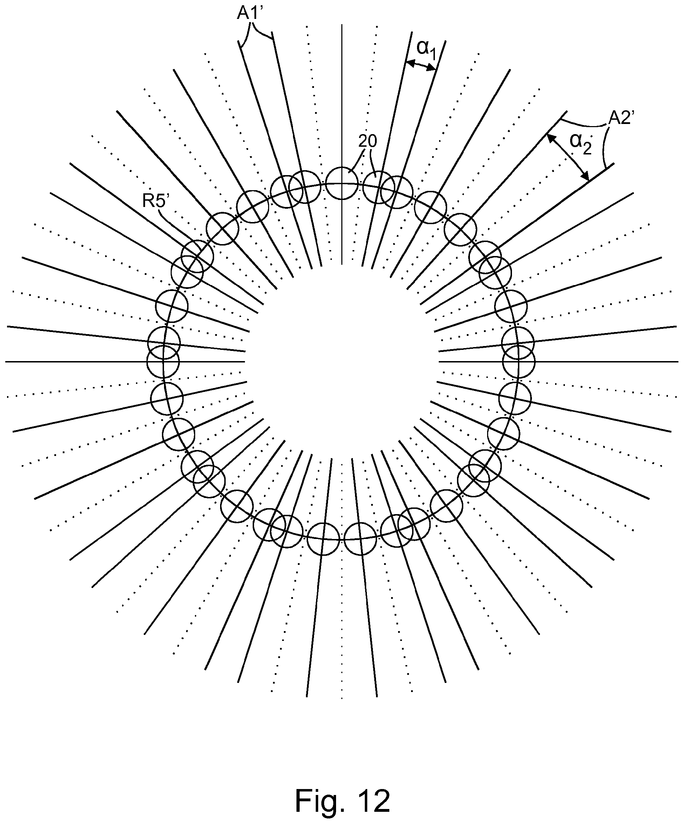

Nachfolgend wird ein zweites Ausführungsbeispiel an Hand der Fig. 5 bis 14 erläutert. Bei diesem Ausführungsbeispiel wird mit Hilfe einer Vorrichtung, die dem in Fig. 1 und 2 abgebildeten Ausführungsbeispiel entspricht, auf der Unterlage 3 ein etwa rechteckiger Formgegenstand gedruckt. Der Formgegenstand wird als Schichtstapel 2' mit einer Vielzahl von übereinandergeschichteten Materialschichten auf die Unterlage 3 aufgebracht. Die Geometrie des Formgegenstands ist im ersten Speicher 18 in Form von vektoriellen Bilddaten hinterlegt. Für Schicht des Schichtstapels sind jeweils entsprechende vektorielle Bilddaten im ersten Speicher 18 hinterlegt.

Aus Gründen der grafischen Darstellbarkeit wurde bei diesem Ausführungsbeispiel eine sehr geringe Anzahl von Polarkoordinatenrasterpunkten 20 gewählt. Wie in Fig. 5 erkennbar ist, sind insgesamt sieben Kreislinien R1'.. R7' vorhanden, auf denen jeweils 60 Polarkoordinatenrasterpunkte 20 angeordnet sind. In der Praxis ist jedoch die Anzahl der auf den einzelnen Kreislinien R1' .. R7' angeordneten Polarkoordinatenrasterpunkte 20 wesentlich größer. Beispielsweise kann diese Anzahl den Wert 64.000 haben. Auch die Anzahl der Kreislinien R1' .. R7' ist entsprechend größer als sieben. Dies wird dadurch erreicht, dass zwischen den in Fig. 5 dargestellten Kreislinien R1' .. R7' weitere Kreislinien angeordnet sind. Der Durchmesserunterschied von zueinander benachbarten Kreislinien R1' .. R7' entspricht jeweils dem Abstand der Mittelpunkte von radial zur Drehachse 4 zueinander benachbarten Druckkopfdüsen.

Wie in Fig. 5 zu sehen ist, sind die Polarkoordinatenrasterpunkte 20 auf allen Kreislinien R1' .. R7' jeweils in gleichmäßigen Abständen zueinander angeordnet, d.h. der Winkelabstand zwischen auf einer Kreislinie R1' .. R7' zueinander benachbarten Polarkoordinatenrasterpunkten 20 beträgt bei 60 Polarkoordinatenrasterpunkten pro Kreislinie R1' .. R7' jeweils α₁ = 360°/60 = 6°.

Außerdem ist in Fig. 5 erkennbar, dass die Polarkoordinatenrasterpunkte 20 auf 60 geraden Strahlen A1', A2', A3' angeordnet sind, die in der von den Polarkoordinatenrasterpunkten 20 aufgespannten Ebene vom Ursprung des Polarkoordinatenrasters radial nach außen verlaufen und um den Winkelabstand α₁.in Umfangsrichtung der Kreislinien R1' .. R7' relativ zueinander versetzt sind. Der Ursprung befindet sich auf der Drehachse 4 der drehbaren Unterlage 3. Deutlich ist erkennbar, dass jeder der 60 Strahlen A1', A2', A3' jeweils jede Kreislinien R1' .. R7' genau einmal scheidet, d.h. es ergeben sich auf jedem Strahl A1', A2', A3' sieben Schnittpunkte, an denen jeweils ein Polarkoordinatenrasterpunkt 20 angeordnet ist.

Im zweiten Speicher 19 ist ein erster Satz mit besonderen Polarkoordinatenrasterpunkte 20 des Polarkoordinatenrasters hinterlegt, der nur einen Teil der insgesamt vorhandenen Polarkoordinatenrasterpunkte 20 umfasst. In der Praxis kann dies zum Beispiel dadurch erreicht werden, dass die Anzahl der für den ersten Satz vorgesehenen Speicherstellen des zweiten Speichers geringer ist als die Anzahl der Polarkoordinatenrasterpunkte 20 oder dass Speicherstellen des zweiten Speichers, die einem Polarkoordinatenrasterpunkt 20 entsprechen, der kein besonderer Polarkoordinatenrasterpunkt 20 ist, jeweils mit einem logischen Wert gefüllt werden, der einem "Loch" entspricht, beispielsweise mit den logischen Wert "0" hat.

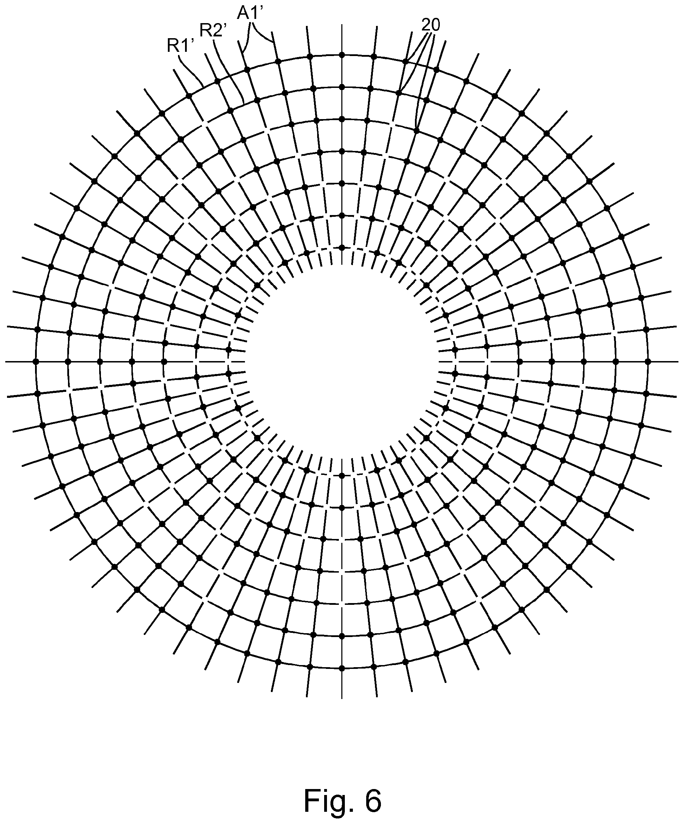

Die Anordnung der besonderen Polarkoordinatenrasterpunkte 20 des ersten Satzes ist aus Fig. 6 ersichtlich. Die Anzahl der auf der äußeren Kreislinie R1' befindlichen besondere Polarkoordinatenrasterpunkte 20 stimmt mit der Anzahl der auf dieser Kreislinie R1' liegenden Polarkoordinatenrasterpunkte 20 überein, siehe Fig. 5, 6 und 8.

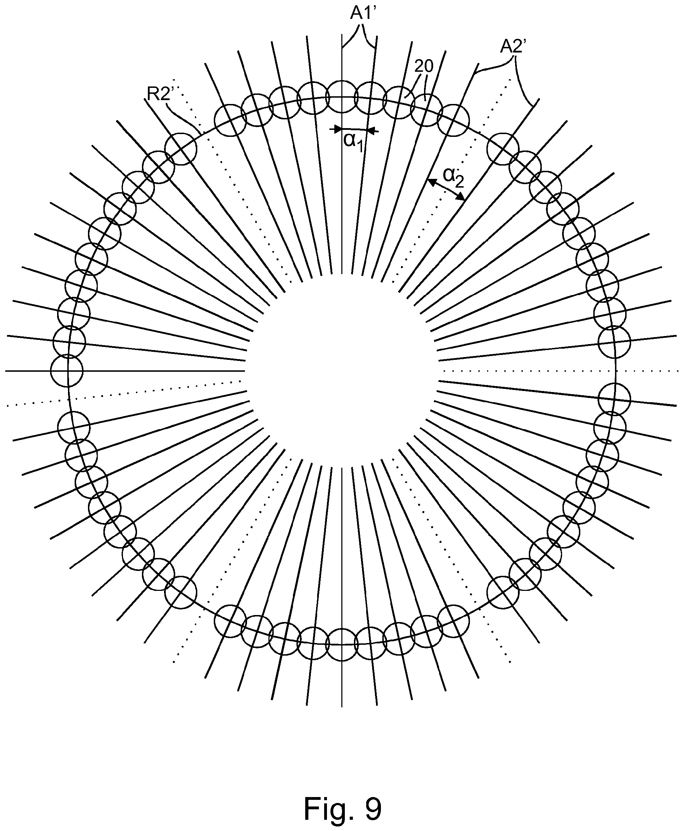

Die Anzahl der besonderen Polarkoordinatenrasterpunkte 20 des ersten Satzes, die auf den innerhalb der äußeren Kreislinie R1' angeordneten weiteren Kreislinien R2' .. R7' liegen, entspricht jeweils der Anzahl der besonderen Polarkoordinatenrasterpunkte 20 der äußeren Kreislinie R1' dieses Satzes multipliziert mit dem Quotient aus dem Durchmesser der weiteren Kreislinie R2' .. R7' und dem Durchmesser der äußeren Kreislinie R1'. Dabei ist das Ergebnis dieser Rechenoperation ggf. auf einen ganzzahligen Wert zu runden, weil auf einer Kreislinie R1' .. R7' nur eine ganzzahlige Anzahl von Polarkoordinatenrasterpunkten 20 angeordnet werden kann. Somit ergibt sich, dass die Anzahl der auf den Kreislinien R1' .. R7' liegenden besonderen Polarkoordinatenrasterpunkten 20, ausgehend von der äußeren Kreislinie R1' zur inneren Kreislinie R7' hin, jeweils von Kreislinie R1' .. R7' zu Kreislinie R1' .. R7' abnimmt, siehe Fig. 9 bis 14.

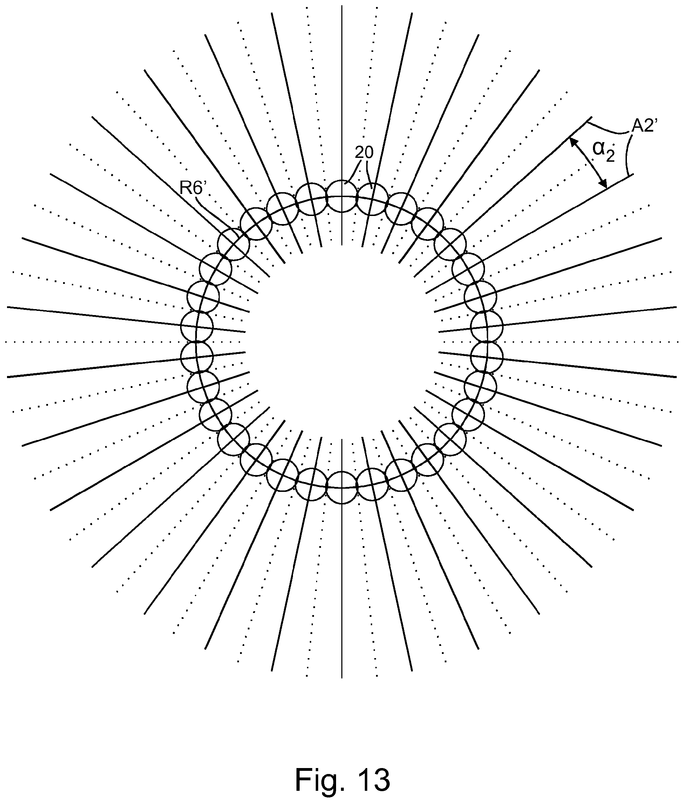

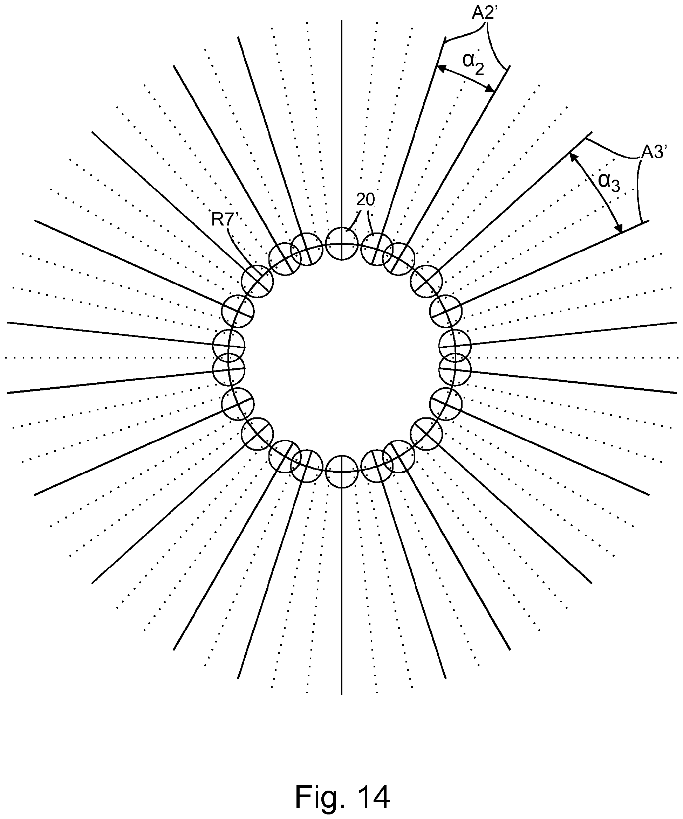

Wie in Fig. 6 bis 14 erkennbar ist, sind die besonderen Polarkoordinatenrasterpunkte 20 des ersten Satzes jeweils in möglichst gleichmäßigen Abständen entlang der Kreislinien verteilt R1' .. R7'. Da die besonderen Polarkoordinatenrasterpunkte 20 des ersten Satzes jedoch bei allen Kreislinien R1' .. R7' im gleichen Winkelraster angeordnet sind, kann der Winkelabstand bei manchen Kreislinien R2' .. R5', R7' nicht bei allen in Umfangsrichtung auf der Kreislinie R1' .. R7' zueinander benachbarten besonderen Polarkoordinatenrasterpunkte 20 gleich groß gewählt werden. So beträgt beispielsweise bei der Winkelabstand zwischen besonderen Polarkoordinatenrasterpunkten 20, die auf den in Fig. 9 bis 13 dargestellten Kreislinien R2' .. R6' liegen, entweder α₁ =6° oder α₂ =12°. Bei den besonderen Polarkoordinatenrasterpunkten 20, die auf der in Fig. 14 dargestellten inneren Kreislinie R7' liegen, beträgt der Winkelabstand zwischen α₂ =12° und α₂ =18°. Die Schwankung des Winkelabstands entspricht also bei diesen Kreislinien R2' .. R5', R7' dem Winkelabstand α₁ der auf der äußeren Linie liegenden besonderen Polarkoordinatenrasterpunkte 20. Nur bei den in den Fig. 9 und 13 abgebildeten Kreislinien R1', R6' ist der Winkelabstand der besonderen Polarkoordinatenrasterpunkte 20 konstant.

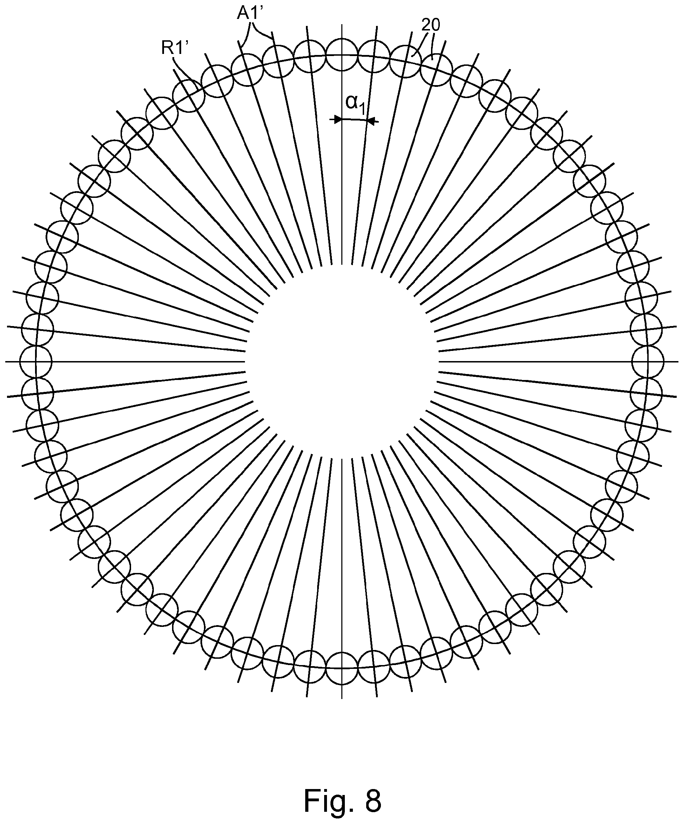

Zusammenfassend ergibt sich also, dass die besonderen Polarkoordinatenrasterpunkte 20 des ersten Satzes, die auf der in Fig. 8 abgebildeten äußeren Kreislinie R1' liegen sind, auf ersten Strahlen A1', A2', A3' angeordnet sind, die einen ersten Winkelabstand α₁ zueinander haben. Mindestens zwei besondere Polarkoordinatenrasterpunkte 20, die sich jeweils auf einem der in den Fig. 9, 10, 11, 12 und 13 abgebildeten, zwischen dem äußeren und dem inneren Kreisring liegenden Kreisringe befinden, sind jeweils auf zweiten Strahlen A1', A2', A3' angeordnet, die einen zweiten Winkelabstand α₂ zueinander haben, der größer ist als der erste Winkelabstand α₁. Mindestens zwei besondere Polarkoordinatenrasterpunkte 20 des ersten Satzes, die auf dem in Fig. 14 abgebildeten inneren Kreisring liegen, sind auf dritten Strahlen A1', A2', A3' angeordnet, die einen dritten Winkelabstand α₃ zueinander haben, der größer ist als der zweite Winkelabstand α₂.

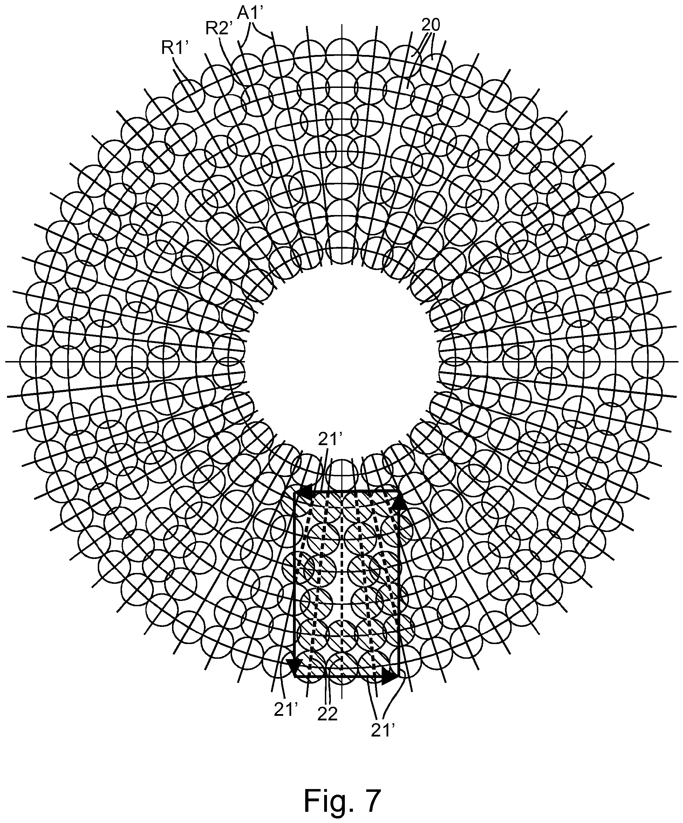

Mit Hilfe des Rechners 15 werden die im ersten Speicher 18 für die erste Schicht hinterlegten vektoriellen Bilddaten in Polarkoordinaten transformiert. In Fig. 7 sind die in die Polarkoordinaten transformierten Bildvektoren 21', welche der Kontur der aufzubringenden Schicht entsprechen, dargestellt. Der durch die Bildvektoren 21' gebildete, geschlossene Polygonzug wird mit den im zweiten Speicher 19 hinterlegten besonderen Polarkoordinatenrasterpunkten 20 des ersten Satzes verglichen. Dazu werden zunächst die Abschnitte 22 der Strahlen A1', A2', A3' ermittelt, die sich innerhalb des durch die Bildvektoren 21' definierten Polygonzugs befinden. Diese sind in Fig. 9 strichliniert dargestellt. Danach werden diejenigen besonderen Polarkoordinatenrasterpunkte 20 bestimmt, die auf diesen Strahlen-Abschnitten 22 liegen und sich somit innerhalb der von den Bildvektoren 21' umgrenzten Fläche befinden. Für diese besonderen Polarkoordinatenrasterpunkte 20 wird mittels des Druckkopfs jeweils an der entsprechenden Stelle ein Materialtropfen auf die Unterlage 3 bzw. eine zuvor darauf aufgebrachte Materialschicht abgegeben. Die entsprechenden Polarkoordinatenrasterpunkte 20 sind in Fig. 7 schraffiert dargestellt. Für die außerhalb der von den Bildvektoren 21' umgrenzten Fläche befindlichen besonderen Polarkoordinatenrasterpunkte 20 wird kein Materialtropfen abgegeben. Diese Polarkoordinatenrasterpunkte 20 sind in Fig. 7 nicht schraffiert. Der Durchmesser, mit dem die Materialtröpfchen mit Hilfe der Druckkopfanordnungen 13A, 13B auf die Unterlage 3 bzw. eine oder mehrere darauf zuvor aufgebrachte Materialschicht(en) aufgetragen werden, entspricht dem Durchmesser der Kreise, mit welchen die Polarkoordinatenrasterpunkte 20 in den Fig. 7 bis 16 dargestellt sind.

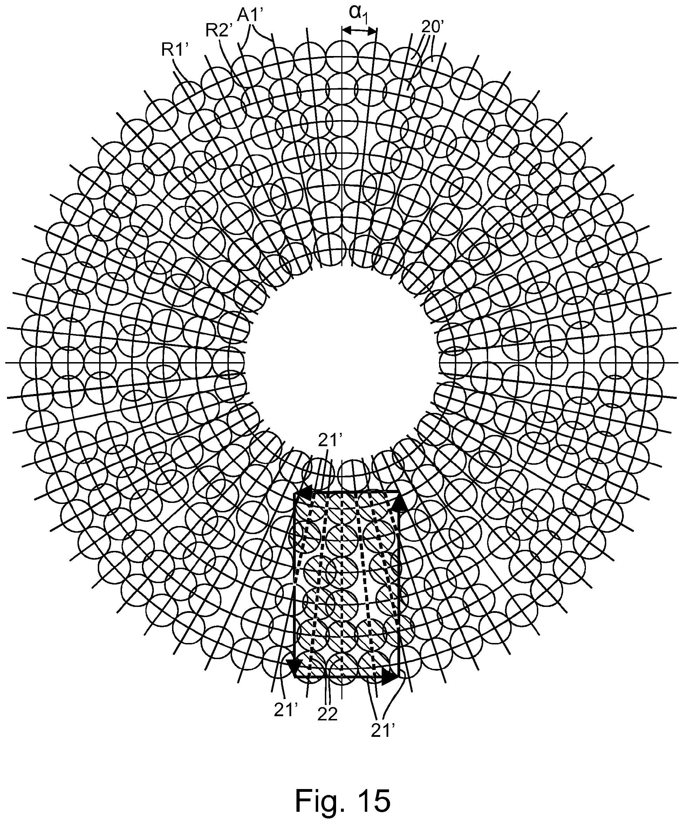

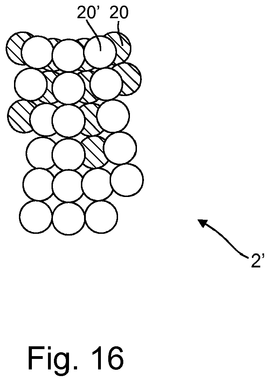

Nachdem die erste Schicht des Schichtstapels 2' vollständig auf die Unterlage 3 aufgetragen wurde, wird die Unterlage 3 um die Schichtdicke relativ zum Drucckopf 13A abgesenkt, um eine zweite Schicht in entsprechender Weise aufzubringen. Für das Auftragen der zweiten Schicht wird anstelle des ersten in Fig. 7 abgebildeten ersten Satzes mit besonderen Polarkoordinatenpunkten 20 der in Fig. 15 dargestellte zweite Satz mit besonderen Polarkoordinatenpunkten 20' verwendet. Wie durch einen Vergleich von Fig. 7 mit Fig. 15 deutlich wird, können die besonderen Polarkoordinatenpunkten 20 des ersten Satzes durch eine Drehung um den Ursprung des Polarkoordinatenrasters bzw. um die Drehachse 4 um den Winkel α₁ entgegen dem Uhrzeigersinn überführt werden. Dadurch wird erreicht, dass die Stellen, an denen das Polarkoordinatenraster keine Polarkoordinatenrasterpunkte 20 bzw. "Löcher" aufweist, bei den einzelnen Schichten in Umfangsrichtung der Kreislinien R1' .. R7' zueinander versetzt sind. Wie in Fig. 16 erkennbar ist, ergibt sich dadurch eine gleichmäßigere Materialverteilung im Schichtstapel 2', bei der Materialtropfen der zweiten Schicht Löcher in der ersten Schicht und Materialtropfen der ersten Schicht Löcher in der zweiten Schicht überdecken.

Erwähnt werden soll noch, dass die Bilddaten bei dem in den Fig. 5 bis 16 gezeigten Ausführungsbeispiel auch in Form von Bildpunkten bzw. in Form eines Bitmap im bestimmten kartesischen Koordinatensystem vorliegen können. In diesem Fall werden die Bildpunkte des Bitmaps mit Hilfe des Rechners in Polarkoordinaten transformiert, und die so erhaltenen Polarkoordinatenbilddaten mit den im zweiten Speicher 19 hinterlegten besonderen Polarkoordinatenrasterpunkten 20, 20', 20A, 20B verglichen. Bei Übereinstimmung wird mittels des Druckkopfs an der entsprechenden Stelle ein Materialtropfen auf die Unterlage 3 bzw. eine zuvor darauf aufgebrachte Materialschicht abgegeben. Die entsprechenden Polarkoordinatenrasterpunkte 20 sind in Fig. 7 schraffiert dargestellt. Ergibt der Vergleich keine Übereinstimmung mit einem Polarkoordinatenrasterpunkt 20, wird kein Materialtropfen abgegeben.

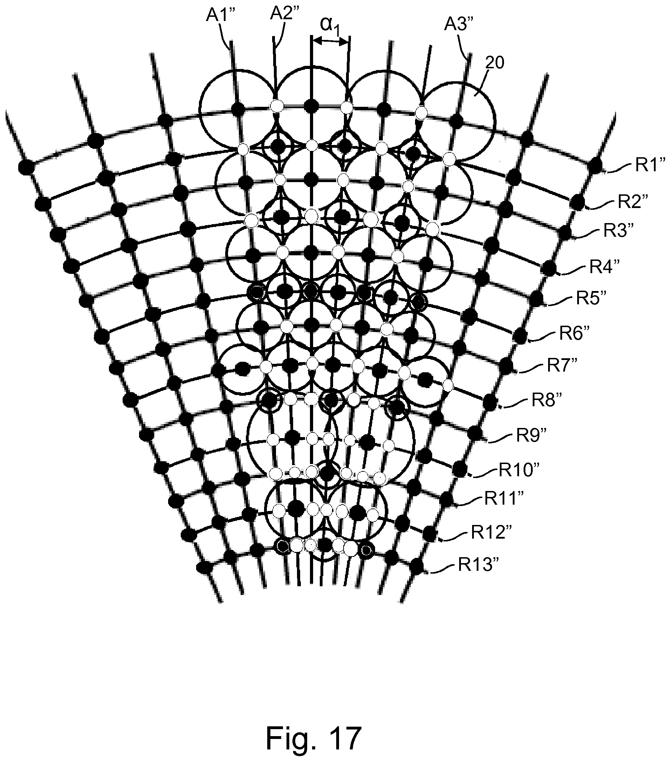

Bei dem in Fig. 17 abgebildeten dritten Ausführungsbeispiel werden die Materialtröpfchen mit unterschiedlichen Durchmessern auf die Unterlage 3 bzw. eine oder mehrere zuvor darauf aufgebrachte Materialschicht(en) aufgetragen. In Fig. 17 entspricht der Durchmesser der Materialtröpfchen dem Durchmesser der Kreise, mit welchen die Polarkoordinatenrasterpunkte 20 grafisch dargestellt sind. Die unterschiedlichen Durchmesser der Materialtröpfchen werden dadurch erzeugt, dass alle Druckkopfdüsen des Druckkopfs den gleichen Durchmesser haben und dass an den Stellen, an denen große Materialtröpfchen aufgetragen werden sollen, mit Hilfe einer der betreffenden Stelle zugeordneten Druckkopfdüse eine dem Volumen der zu erzeugenden Materialtröpfchens entsprechende Anzahl von Subtröpfchen abgegeben wird, die vor dem Auftreffen auf der Unterlage bzw. einer darauf bereits aufgetragenen Materialschicht zu dem großen Materialtröpfchen miteinander verschmelzen. In der Praxis kann die Anzahl der an einer zu bedruckenden Stelle abgegebenen Subtröpfchen beispielsweise zwischen 1 und 10 betragen.

Im zweiten Speicher 19 ist für die einzelnen Polarkoordinatenrasterpunkte 20 jeweils eine Volumeninformation abgelegt. Die Vorrichtung 1 ist derart ausgestaltet ist, dass die Materialtröpfchen an den zu bedruckenden Stellen jeweils mit einem Volumen erzeugt werden, das der im zweiten Speicher 19 für den betreffenden Polarkoordinatenrasterpunkt 20 abgelegten Volumeninformation entspricht.

Wie in Fig. 17 erkennbar ist, wird eine erste Reihe von fünf einem ersten Strahl A1" angeordneten Materialtröpfchen derart auf die Unterlage 3 bzw. eine darauf aufgebrachte Materialschicht aufgetragen, dass das Volumen der Materialtröpfchen ausgehend vom äußeren Ende (in Fig. 17 oben) zum inneren Ende der ersten Reihe hin abnimmt.

Außerdem wird eine zweite Reihe von vier auf einem zweiten Strahl A2" angeordneten Materialtröpfchen derart erzeugt, dass das Volumen der auf die Unterlage 3 bzw. eine darauf aufgebrachte Materialschicht aufgetragenen Materialtröpfchen ausgehend vom äußeren Ende (in Fig. 17 oben) zum inneren Ende der zweiten Reihe hin zunimmt. Der zweite Strahl A2" ist in Umfangsrichtung der Kreislinien R1" .. R13" direkt zum ersten Strahl A1" benachbart. In Fig. 17 ist deutlich erkennbar, das sich das durch die Reihen gebildete Muster in Umfangsrichtung der Kreislinien R1" .. R13" wiederholt, d.h. die ersten und zweiten Reihen wechseln in Umfangsrichtung einander ab.

Auf einem Segment einer ersten Kreislinie R1" des Polarkoordinatenrasters, welches sich von einem ersten Strahl A1" zu einem weiteren Strahl A3" des Polarkoordinatenrasters erstreckt, werden vier Materialtröpfchen 20 abgegeben. Auf einem Segment einer weiten Kreislinie R3", deren Durchmesser kleiner ist als der Durchmesser der erster Kreislinie R1", werden vier weitere Materialtröpfchen 20 abgegeben. Dieses Segment erstreckt sich ebenfalls vom ersten Strahl A1" zum weiteren Strahl A3". Die Summe der Volumina der zweiten Materialtröpfchen 20 ist kleiner ist als die Summe der Volumina der ersten Materialtröpfchen 20.

## Patentansprüche

1. Vorrichtung (1) zum Aufbringen von fließfähigem Material auf eine um eine Drehachse (4) drehbare Unterlage (3) gemäß vorgegebener Bilddaten, die als Bildpunkte oder als Vektoren eines bestimmten kartesischen Koordinatensystems in einem ersten Speicher (18) hinterlegt sind, mit wenigstens einem Druckkopf (13A, 13B), der mehrere in einem Düsenabstand zueinander angeordnete Düsen zur Abgabe von Materialtröpfchen des fließfähigen Materials aufweist und in einem Vertikalabstand zur Unterlage angeordnet ist, und einer Ansteuereinrichtung (8) zur Positionierung der Unterlage (3) relativ zu dem wenigstens einen Druckkopf (13A, 13B) sowie zur Steuerung der Abgabe der Materialtröpfchen, wobei ein zweiter Speicher (19) vorhanden ist, in dem besondere Polarkoordinatenrasterpunkte (20, 20', 20A, 20B) eines bestimmten Polarkoordinatenrasters, die auf Kreislinien (R1, R2, R1' .. R7', R1" .. R13") angeordnet sind, die einen vorbestimmten Kreislinienabstand zueinander haben, und die auf ersten Strahlen (A1, A1') angeordnet sind, die einen ersten Winkelabstand zueinander haben, sowie in Richtung des Ursprungs auf weiteren Strahlen (A2, A2', A3') angeordnet sind, die einen Winkelabstand zueinander haben, der größer als der erste Winkelabstand ist, als kartesische Rasterpunkte in Koordinaten des bestimmten kartesischen Koordinatensystems hinterlegt sind, wobei ein Rechner (15) vorhanden ist, mittels dem die kartesischen Rasterpunkte mit den Bildpunkten oder den Vektoren der Bilddaten verglichen werden, und wobei die Düsen des Druckkopfs (13A, 13B) derart steuerbar sind, dass sie lediglich dann Materialtröpfchen abgeben, wenn ihre Position relativ zu der Unterlage der Position eines besonderen Polarkoordinatenrasterpunktes (20A, 20B) entspricht, bei dem der Vergleich eine Übereinstimmung ergibt.

2. Vorrichtung (1) nach Anspruch 1, **dadurch gekennzeichnet, dass** im ersten Speicher (18) Bilddaten für eine erste und für eine zweite Schicht eines aus mindestens zwei Materialtröpfchen-Schichten herzustellenden Schichtstapels (2) abgelegt sind, dass im zweiten Speicher (19) ein erster und ein zweiter Satz mit besonderen Polarkoordinatenrasterpunkten (20, 20') hinterlegt ist, dass bei diesen Sätzen die Polarkoordinatenrasterpunkte (20, 20') unterschiedlich in dem bestimmten Polarkoordinatenraster angeordnet sind, und dass mit Hilfe des Rechners (15)
- die Polarkoordinatenrasterpunkte (20) des ersten Satzes in Koordinaten des bestimmten kartesischen Koordinatensystems transformierbar sind und die so erhaltenen ersten kartesischen Rasterpunkte mit den Bildpunkten oder den Vektoren der Bilddaten der ersten Schicht vergleichbar sind, und
- die Polarkoordinatenrasterpunkte (20') des zweiten Satzes in Koordinaten des bestimmten kartesischen Koordinatensystems transformierbar sind und die so erhaltenen zweiten kartesischen Rasterpunkte mit den Bildpunkten oder den Vektoren der Bilddaten der zweiten Schicht verglichen werden.

3. Vorrichtung (1) zum Aufbringen von fließfähigem Material auf eine um eine Drehachse (4) drehbare Unterlage (3) gemäß vorgegebener Bilddaten, die als Bildpunkte oder als Vektoren eines bestimmten kartesischen Koordinatensystems, in einem ersten Speicher (18) hinterlegt sind, mit wenigstens einem Druckkopf (13A, 13B), der mehrere in einem Düsenabstand zueinander angeordnete Düsen zur Abgabe von Materialtröpfchen des fließfähigen Materials aufweist und in einem Vertikalabstand zur Unterlage angeordnet ist, und einer Ansteuereinrichtung (8) zur Positionierung der Unterlage (3) relativ zu dem wenigstens einen Druckkopf (13A, 13B) sowie zur Steuerung der Abgabe der Materialtröpfchen, wobei ein zweiter Speicher (19) vorhanden ist, in dem besondere Polarkoordinatenrasterpunkte (20, 20', 20A, 20B) eines bestimmten Polarkoordinatenrasters hinterlegt sind, die auf Kreislinien (R1, R2, R1' .. R7', R1" .. R13") angeordnet sind, die einen vorbestimmten Kreislinienabstand zueinander haben, und die auf ersten Strahlen (A1, A1') angeordnet sind, die einen ersten Winkelabstand zueinander haben, sowie in Richtung des Ursprungs auf weiteren Strahlen (A2, A2', A3') angeordnet sind, die einen Winkelabstand zueinander haben, der größer als der erste Winkelabstand ist, wobei ein Rechner (15) vorhanden ist, mittels dem die im ersten Speicher (18) hinterlegten Bildpunkte oder Vektoren in Polarkoordinaten transformierbar sind, und die so erhaltenen Polarkoordinatenbilddaten mit den im zweiten Speicher (19) hinterlegten besonderen Polarkoordinatenrasterpunkte (20, 20', 20A, 20B) verglichen werden, und wobei die Düsen des Druckkopfs (13A, 13B) derart steuerbar sind, dass sie lediglich dann Materialtröpfchen abgeben, wenn ihre Position relativ zu der Unterlage der Position eines besonderen Polarkoordinatenrasterpunktes (20A, 20B) entspricht, bei dem der Vergleich eine Übereinstimmung ergibt.

4. Vorrichtung (1) nach Anspruch 3, **dadurch gekennzeichnet, dass** im ersten Speicher (18) Bilddaten für eine erste und für eine zweite Schicht eines aus mindestens zwei Materialtröpfchen-Schichten herzustellenden Schichtstapels (2) abgelegt sind, dass im zweiten Speicher (19) ein erster und ein zweiter Satz mit besonderen Polarkoordinatenrasterpunkten (20, 20') hinterlegt ist, dass bei diesen Sätzen die Polarkoordinatenrasterpunkte (20, 20') unterschiedlich in dem bestimmten Polarkoordinatenraster angeordnet sind, und dass mit Hilfe des Rechners (15)
- die im ersten Speicher (18) für die erste Schicht hinterlegten Bildpunkte oder Vektoren in Polarkoordinaten transformierbar sind und die so erhaltenen ersten Polarkoordinatenbilddaten mit den im zweiten Speicher (19) hinterlegten besonderen Polarkoordinatenrasterpunkten (20, 20', 20A, 20B) des ersten Satzes verglichen werden, und
- die im ersten Speicher (18) für die zweite Schicht hinterlegten Bildpunkte oder Vektoren in Polarkoordinaten transformierbar sind und die so erhaltenen zweiten Polarkoordinatenbilddaten mit den im zweiten Speicher (19) hinterlegten besonderen Polarkoordinatenrasterpunkten (20, 20', 20A, 20B) des zweiten Satzes verglichen werden.

5. Vorrichtung (1) nach einem der Ansprüche 1 bis 4, **dadurch gekennzeichnet, dass** die Düsen derart angeordnet sind, dass eine durch mindestens zwei Düsen verlaufende Gerade parallel zu einem Strahl (A1, A2, A1', A2', A3') des Polarkoordinatenrasters verläuft.

6. Vorrichtung (1) nach einem der Ansprüche 1 bis 5, **dadurch gekennzeichnet, dass** der Kreislinienabstand dem Düsenabstand entspricht.

7. Vorrichtung (1) nach einem der Ansprüche 1 bis 6, **dadurch gekennzeichnet, dass** der Winkelabstand der im zweiten Speicher (19) hinterlegten besonderen Polarkoordinatenrasterpunkte (20, 20', 20A, 20B) derart gewählt ist, dass der Abstand von zwei auf derselben Kreislinie (R1, R2, R1' .. R7', R1" .. R13") nebeneinander liegenden besonderen Polarkoordinatenrasterpunkten (20, 20', 20A, 20B) des Polarkoordinatenrasters wenigstens dem 0,6-fachen, vorzugsweise dem 0,8-fachen, insbesondere dem Einfachen des Düsenabstands entspricht, wobei der Winkelabstand so gewählt ist, dass er einem Stammbruchteil eines Vollkreises bzw. einer Umdrehung entspricht.

8. Vorrichtung (1) nach einem der Ansprüche 1 bis 7, **dadurch gekennzeichnet, dass** der Winkelabstand der weiteren Strahlen (A2, A2', A3') des bestimmten Polarkoordinatenrasters einem ganzzahligen Vielfachen des Winkelabstandes der ersten Strahlen (A1, A1') entspricht.

9. Vorrichtung (1) nach einem der Ansprüche 1 bis 7, **dadurch gekennzeichnet, dass** mindestens zwei Polarkoordinatenrasterpunkten (20) Materialtröpfchen unterschiedlichen Volumens zugeordnet sind, dass in dem zweiten Speicher (19) für die einzelnen Polarkoordinatenrasterpunkte (20) jeweils eine Volumeninformation für ein an dem betreffenden Polarkoordinatenrasterpunkt (20) abzugebendes Materialtröpfchen abgelegt ist, und dass die Vorrichtung (1) derart ausgestaltet ist, dass die Materialtröpfchen an den zu bedruckenden Stellen jeweils mit einem Volumen aufgetragen werden, das der im zweiten Speicher (19) für den betreffenden Polarkoordinatenrasterpunkt (20) abgelegten Volumeninformation entspricht.

10. Vorrichtung (1) nach Anspruch 9, **dadurch gekennzeichnet, dass** auf einer ersten Kreislinie (R1") des Polarkoordinatenrasters erste Polarkoordinatenrasterpunkte (20) und auf einer weiteren Kreislinie (R3") des Polarkoordinatenrasters weitere Polarkoordinatenrasterpunkte (20) angeordnet sind, dass der Durchmesser der weiteren Kreislinie (R3") kleiner ist als der Durchmesser der ersten Kreislinie (R1"), und dass die im zweiten Speicher (19) abgelegten Volumeninformationen derart gewählt sind, und dass die Summe der den Polarkoordinatenrasterpunkten (20) der weiteren Kreislinie (R3") zugeordneten Volumina kleiner ist als die Summe der den Polarkoordinatenrasterpunkten (20) der ersten Kreislinie (R1") zugeordneten Volumina.

11. Verfahren zum Aufbringen von fließfähigem Material auf eine um eine Drehachse (4) drehbare Unterlage (3) gemäß vorgegebener Bilddaten, die als Bildpunkte oder als Vektoren eines bestimmten kartesischen Koordinatensystems, in einem ersten Speicher (18) hinterlegt sind, wobei Materialtröpfchen des fließfähigen Materials mittels eines Druckkopfes (13A, 13B), der mehrere in einem Düsenabstand zueinander angeordnete Düsen aufweist, auf die Unterlage (3) aufgebracht werden, wobei besondere Polarkoordinatenrasterpunkte (20, 20', 20A, 20B) eines bestimmten Polarkoordinatenrasters, die auf Kreislinien (R1, R2, R1' .. R7', R1" .. R13") angeordnet sind, die einen vorbestimmten Kreislinienabstand zueinander haben, und die auf ersten Strahlen (A1, A1') angeordnet sind, die einen ersten Winkelabstand zueinander haben, und welche besonderen Polarkoordinatenrasterpunkte in Richtung des Ursprungs auf weiteren Strahlen (A2, A2', A3') angeordnet sind, die einen Winkelabstand zueinander haben, der größer als der erste Winkelabstand ist, bestimmt werden, wobei die besonderen Polarkoordinatenrasterpunkte (20, 20', 20A, 20B) in Koordinaten des bestimmten kartesischen Koordinatensystems transformiert werden, und die so erhaltenen kartesischen Rasterpunkte mit den Bildpunkten oder den Vektoren der Bilddatei verglichen werden, und wobei die Düsen des Drucckopfs (13A, 13B) derart gesteuert werden, dass sie lediglich dann Materialtröpfchen abgeben, wenn ihre Position relativ zu der Unterlage der Position eines besonderen Polarkoordinatenrasterpunktes (20A, 20B) entspricht, bei dem der Vergleich eine Übereinstimmung ergibt.

12. Verfahren nach Anspruch 11, **dadurch gekennzeichnet, dass** ein Schichtstapel (2) auf die Unterlage (3) aufgebracht wird, der mindestens zwei übereinander angeordnete Schichten mit Materialtröpfchen aufweist, dass ein erster und ein zweiter Satz mit besonderen Polarkoordinatenrasterpunkten (20, 20') des bestimmten Polarkoordinatenrasters derart ermittelt wird, dass bei den Sätzen die Polarkoordinatenrasterpunkte (20, 20') unterschiedlich in dem bestimmten Polarkoordinatenraster angeordnet sind,
- dass zum Aufbringen einer ersten Schicht der Materialtröpfchen die besonderen Polarkoordinatenrasterpunkte (20) des ersten Satzes in Koordinaten des bestimmten kartesischen Koordinatensystems transformiert werden, und die so erhaltenen kartesischen Rasterpunkte mit für die erste Schicht vorgesehenen ersten Bildpunkten oder Vektoren der Bilddatei verglichen werden, und
- dass zum Aufbringen einer zweiten Schicht der Materialtröpfchen die besonderen Polarkoordinatenrasterpunkte (20) des zweiten Satzes in Koordinaten des bestimmten kartesischen Koordinatensystems transformiert werden, und die so erhaltenen kartesischen Rasterpunkte mit für die zweite Schicht vorgesehenen zweiten Bildpunkten oder Vektoren der Bilddatei verglichen werden.

13. Verfahren zum Aufbringen von fließfähigem Material auf eine um eine Drehachse (4) drehbare Unterlage (3) gemäß vorgegebener Bilddaten, die als Bildpunkte oder als Vektoren eines bestimmten kartesischen Koordinatensystems, in einem ersten Speicher (18) hinterlegt sind, wobei Materialtröpfchen des fließfähigen Materials mittels eines Druckkopfes (13A, 13B), der mehrere in einem Düsenabstand zueinander angeordnete Düsen aufweist, auf die Unterlage (3) aufgebracht werden, wobei besondere Polarkoordinatenrasterpunkte (20, 20', 20A, 20B) eines bestimmten Polarkoordinatenrasters, die auf Kreislinien (R1, R2, R1' .. R7', R1" .. R13") angeordnet sind, die einen vorbestimmten Kreislinienabstand zueinander haben, und die auf ersten Strahlen (A1, A1') angeordnet sind, die einen ersten Winkelabstand zueinander haben, und welche besonderen Polarkoordinatenrasterpunkte in Richtung des Ursprungs auf weiteren Strahlen (A2, A2', A3') angeordnet sind, die einen Winkelabstand zueinander haben, der größer als der erste Winkelabstand ist, bestimmt werden, wobei die Bildpunkte oder Vektoren des bestimmten kartesischen Koordinatensystems in Polarkoordinaten transformiert werden, und die so erhaltenen Polarkoordinatenbilddaten mit den besonderen Polarkoordinatenrasterpunkten (20, 20', 20A, 20B) verglichen werden, und wobei die Düsen des Druckkopfs (13A, 13B) derart gesteuert werden, dass sie lediglich dann Materialtröpfchen abgeben, wenn ihre Position relativ zu der Unterlage der Position eines besonderen Polarkoordinatenrasterpunktes (20A, 20B) entspricht, bei dem der Vergleich eine Übereinstimmung ergibt.

14. Verfahren nach Anspruch 13, **dadurch gekennzeichnet, dass** ein Schichtstapel (2) auf die Unterlage (3) aufgebracht wird, der mindestens zwei übereinander angeordnete Schichten mit Materialtröpfchen aufweist, dass ein erster und ein zweiter Satz mit besonderen Polarkoordinatenrasterpunkten (20, 20') des bestimmten Polarkoordinatenrasters derart ermittelt wird, dass bei den Sätzen die Polarkoordinatenrasterpunkte (20, 20') unterschiedlich in dem bestimmten Polarkoordinatenraster angeordnet sind,
- dass zum Aufbringen einer ersten Schicht der Materialtröpfchen dieser zugeordneten Bildpunkte oder Vektoren des bestimmten kartesischen Koordinatensystems in Polarkoordinaten transformiert werden, und die so erhaltenen ersten Polarkoordinatenbilddaten mit den besonderen Polarkoordinatenrasterpunkten (20, 20', 20A, 20B) des ersten Satzes verglichen werden, und
- dass zum Aufbringen einer zweiten Schicht der Materialtröpfchen dieser zugeordneten Bildpunkte oder Vektoren des bestimmten kartesischen Koordinatensystems in Polarkoordinaten transformiert werden, und die so erhaltenen zweiten Polarkoordinatenbilddaten mit den besonderen Polarkoordinatenrasterpunkten (20, 20', 20A, 20B) des zweiten Satzes verglichen werden.

15. Verfahren nach Anspruch 12 oder 14, **dadurch gekennzeichnet, dass** die Polarkoordinatenrasterpunkte (20') des ersten und des zweiten Satzes um einen Winkel um den Ursprung relativ zueinander gedreht sind, und dass der Winkel vorzugsweise dem Winkelabstand der auf der äußersten Kreislinie befindlichen besonderen Polarkoordinatenrasterpunkte oder einem ganzzahligen Vielfachen dieses Winkelabstands entspricht.

16. Verfahren nach einem der Ansprüche 11 bis 15, **dadurch gekennzeichnet, dass** der Winkelabstand der besonderen Polarkoordinatenrasterpunkte (20, 20', 20A, 20B) derart bestimmt wird, dass der Abstand von zwei auf derselben Kreislinie (R1, R2, R1' .. R7', R1" .. R13") nebeneinander liegenden besonderen Punkten des Polarkoordinatenrasters wenigstens einem Bruchteil, vorzugsweise jedoch dem einfachen des Düsenabstands entspricht, wobei der Abstand so angepasst wird, dass er einem Stammbruchteil eines Vollkreises entspricht.

17. Verfahren nach einem der Ansprüche 11 bis 16, **dadurch gekennzeichnet, dass** der Winkelabstand der Strahlen (A1, A2, A1', A2', A3') des bestimmten Polarkoordinatenrasters derart bestimmt wird, dass er einem ganzzahligen Vielfachen des Winkelabstandes der ersten Strahlen (A1, A1') entspricht.

18. Verfahren nach einem der Ansprüche 11 bis 17, **dadurch gekennzeichnet, dass** die Materialtröpfchen an mindestens zwei Polarkoordinatenrasterpunkten (20) mit unterschiedlichen Volumina erzeugt werden.

19. Verfahren nach Anspruch 18, **dadurch gekennzeichnet, dass** auf einem Segment einer ersten Kreislinie (R1") des Polarkoordinatenrasters erste Materialtröpfchen an ersten Polarkoordinatenrasterpunkten (20) und auf einem Segment einer zweiten Kreislinie (R2") des Polarkoordinatenrasters zweite Materialtröpfchen an zweiten Polarkoordinatenrasterpunkten (20) angeordnet werden, dass der Durchmesser der zweiten Kreislinie (R2") kleiner ist als der Durchmesser der ersten Kreislinie (R1") und sich die Segmente jeweils von einem ersten zu einem weiteren Strahl (A1", A3") des Polarkoordinatenrasters erstrecken, und dass die Summe der Volumina der zweiten Materialtröpfchen (20) kleiner ist als die Summe der Volumina der ersten Materialtröpfchen (20).

## Claims

1. An apparatus (1) for applying flowable material onto a substrate (3) that is rotatable about an axis of rotation (4), according to predetermined image data which are stored in a first memory (18) as pixels or vectors of a specific Cartesian coordinate system, having at least one printing head (13A, 13B) which has a plurality of nozzles arranged at a nozzle distance from one another for discharging material droplets of the flowable material and which is arranged at a vertical distance from the substrate, and having an actuation device (8) for positioning the substrate (3) relative to the at least one printing head (13A, 13B) and for controlling the discharge of the material droplets, wherein a second memory (19) is present, in which special polar coordinate grid points (20, 20', 20A, 20B) of a specific polar coordinate grid are stored, said special polar coordinate grid points being arranged on circles (R1, R2, R1' ... R7', R1" ... R13") which have a predetermined circumferential distance from one another and being arranged on first rays (A1, A1') which have a first angular distance from one another and being arranged on further rays (A2, A2', A3') in the direction of the origin, said further rays having an angular distance from one another that is greater than the first angular distance, said special polar coordinate grid points being stored as Cartesian grid points in coordinates of the specific Cartesian coordinate system, wherein a computer (15) is present, by means of which the Cartesian grid points are compared to the pixels or the vectors of the image data, and wherein the nozzles of the printing head (13A, 13B) are controllable in such a way that they only discharge material droplets when their position relative to the substrate corresponds to the position of a special polar coordinate grid point (20A, 20B) at which the comparison yields a correspondence.

2. The apparatus (1) as claimed in claim 1, **characterized in that** image data for a first layer and for a second layer of a layer stack (2) that is to be produced from at least two material droplet layers are stored in the first memory (18), **in that** a first set and a second set with special polar coordinate grid points (20, 20') are stored in the second memory (19), **in that** the polar coordinate grid points (20, 20') are arranged differently in the specific polar coordinate grid in these sets, and **in that**, with the aid of the computer (15),
- the polar coordinate grid points (20) of the first set are transformable into coordinates of the specific Cartesian coordinate system and the first Cartesian grid points obtained thus are comparable to the pixels or the vectors of the image data of the first layer, and
- the polar coordinate grid points (20') of the second set are transformable into coordinates of the specific Cartesian coordinate system and the second Cartesian grid points obtained thus are compared to the pixels or the vectors of the image data of the second layer.

3. An apparatus (1) for applying flowable material onto a substrate (3) that is rotatable about an axis of rotation (4), according to predetermined image data which are stored in a first memory (18) as pixels or vectors of a specific Cartesian coordinate system, having at least one printing head (13A, 13B) which has a plurality of nozzles arranged at a nozzle distance from one another for discharging material droplets of the flowable material and which is arranged at a vertical distance from the substrate, and having an actuation device (8) for positioning the substrate (3) relative to the at least one printing head (13A, 13B) and for controlling the discharge of the material droplets, wherein a second memory (19) is present, in which special polar coordinate grid points (20, 20', 20A, 20B) of a specific polar coordinate grid are stored, said special polar coordinate grid points being arranged on circles (R1, R2, R1' ... R7', R1" ... R13") which have a predetermined circumferential distance from one another and being arranged on first rays (A1, A1') which have a first angular distance from one another and being arranged on further rays (A2, A2', A3') in the direction of the origin, said further rays having an angular distance from one another that is greater than the first angular distance, wherein a computer (15) is present, by means of which the pixels or vectors stored in the first memory (18) are transformable into polar coordinates and the polar coordinate image data obtained thus are compared to the special polar coordinate grid points (20, 20', 20A, 20B) stored in the second memory (19), and wherein the nozzles of the printing head (13A, 13B) are controllable in such a way that they only discharge material droplets when their position relative to the substrate corresponds to the position of a special polar coordinate grid point (20A, 20B) at which the comparison yields a correspondence.

4. The apparatus (1) as claimed in claim 3, **characterized in that** image data for a first layer and for a second layer of a layer stack (2) that is to be produced from at least two material droplet layers are stored in the first memory (18), **in that** a first set and a second set with special polar coordinate grid points (20, 20') are stored in the second memory (19), **in that** the polar coordinate grid points (20, 20') are arranged differently in the specific polar coordinate grid in these sets, and **in that**, with the aid of the computer (15),
- the pixels or vectors stored in the first memory (18) for the first layer are transformable into polar coordinates and the first polar coordinate image data obtained thus are compared to the special polar coordinate grid points (20, 20', 20A, 20B) of the first set stored in the second memory (19), and
- the pixels or vectors stored in the first memory (18) for the second layer are transformable into polar coordinates and the second polar coordinate image data obtained thus are compared to the special polar coordinate grid points (20, 20', 20A, 20B) of the second set stored in the second memory (19).

5. The apparatus (1) as claimed in any one of claims 1 to 4, **characterized in that** the nozzles are arranged in such a way that a straight line extending through at least two nozzles extends parallel to a ray (A1, A2, A1', A2', A3') of the polar coordinate grid.

6. The apparatus (1) as claimed in any one of claims 1 to 5, **characterized in that** the circumferential distance corresponds to the nozzle distance.

7. The apparatus (1) as claimed in any one of claims 1 to 6, **characterized in that** the angular distance between the special polar coordinate grid points (20, 20', 20A, 20B) stored in the second memory (19) is selected in such a way that the distance between two special polar coordinate grid points (20, 20', 20A, 20B) of the polar coordinate grid lying next to one another on the same circle (R1, R2, R1' ... R7', R1" ... R13") corresponds to at least 0.6-times, preferably 0.8-times, in particular one times the nozzle distance, wherein the angular distance is selected in such a way that it corresponds to a unit fraction of a full circle or a revolution.

8. The apparatus (1) as claimed in any one of claims 1 to 7, **characterized in that** the angular distance between the further rays (A2, A2', A3') of the specific polar coordinate grid corresponds to an integer multiple of the angular distance between the first rays (A1, A1').

9. The apparatus (1) as claimed in any one of claims 1 to 7, **characterized in that** at least two polar coordinate grid points (20) are assigned material droplets with a different volume, **in that** respectively one volume information item for a material droplet to be discharged at the relevant polar coordinate grid point (20) is stored in the second memory (19) for the individual polar coordinate grid points (20), and **in that** the apparatus (1) is configured in such a way that the material droplets are respectively applied at the sites to be printed with a volume which corresponds to the volume information item stored in the second memory (19) for the relevant polar coordinate grid point (20).

10. The apparatus (1) as claimed in claim 9, **characterized in that** first polar coordinate grid points (20) are arranged on a first circle (R1") of the polar coordinate grid and further polar coordinate grid points (20) are arranged on a further circle (R3") of the polar coordinate grid, **in that** the diameter of the further circle (R3") is smaller than the diameter of the first circle (R1"), and **in that** the volume information items stored in the second memory (19) are selected in such way and that the sum of the volumes assigned to the polar coordinate grid points (20) of the further circle (R3") is smaller than the sum of the volumes assigned to the polar coordinate grid points (20) of the first circle (R1").

11. A method for applying flowable material onto a substrate (3) that is rotatable about an axis of rotation (4), according to predetermined image data which are stored in a first memory (18) as pixels or vectors of a specific Cartesian coordinate system, wherein material droplets of the flowable material are applied onto the substrate (3) by means of a printing head (13A, 13B) which has a plurality of nozzles arranged at a nozzle distance from one another, wherein special polar coordinate grid points (20, 20', 20A, 20B) of a specific polar coordinate grid are determined, said special polar coordinate grid points being arranged on circles (R1, R2, R1' ... R7', R1" ... R13") which have a predetermined circumferential distance from one another and being arranged on first rays (A1, A1') which have a first angular distance from one another and said special polar coordinate grid points being arranged on further rays (A2, A2', A3') in the direction of the origin, said further rays having an angular distance from one another which is greater than the first angular distance, wherein the special polar coordinate grid points (20, 20', 20A, 20B) are transformed into coordinates of the specific Cartesian coordinate system, and the Cartesian grid points obtained thus are compared to the pixels or the vectors of the image file, and wherein the nozzles of the printing head (13A, 13B) are controlled in such a way that they only discharge material droplets when their position relative to the substrate corresponds to the position of a special polar coordinate grid point (20A, 20B) at which the comparison yields a correspondence.

12. The method as claimed in claim 11, **characterized in that** a layer stack (2) is applied to the substrate (3), said layer stack having at least two layers with material droplets arranged over one another, **in that** a first set and a second set with special polar coordinate grid points (20, 20') of the specific polar coordinate grid are ascertained in such a way that the polar coordinate grid points (20, 20') are arranged differently in the specific polar coordinate grid in the sets,
- **in that** the special polar coordinate grid points (20) of the first set are transformed into coordinates of the specific Cartesian coordinate system for applying a first layer of the material droplets, and the Cartesian grid points obtained thus are compared to first pixels or vectors of the image file provided for the first layer, and
- **in that** the special polar coordinate grid points (20) of the second set are transformed into coordinates of the specific Cartesian coordinate system for applying a second layer of the material droplets, and the Cartesian grid points obtained thus are compared to second pixels or vectors of the image file provided for the second layer.

13. A method for applying flowable material onto a substrate (3) that is rotatable about an axis of rotation (4), according to predetermined image data which are stored in a first memory (18) as pixels or vectors of a specific Cartesian coordinate system, wherein material droplets of the flowable material are applied onto the substrate (3) by means of a printing head (13A, 13B) which has a plurality of nozzles arranged at a nozzle distance from one another, wherein special polar coordinate grid points (20, 20', 20A, 20B) of a specific polar coordinate grid are determined, said special polar coordinate grid points being arranged on circles (R1, R2, R1' ... R7', R1" ... R13") which have a predetermined circumferential distance from one another and being arranged on first rays (A1, A1') which have a first angular distance from one another and said special polar coordinate grid points being arranged on further rays (A2, A2', A3') in the direction of the origin, said further rays having an angular distance from one another which is greater than the first angular distance, wherein the pixels or vectors of the specific Cartesian coordinate system are transformed into polar coordinates, and the polar coordinate image data obtained thus are compared to the special polar coordinate grid points (20, 20', 20A, 20B), and wherein the nozzles of the printing head (13A, 13B) are controlled in such a way that they only discharge material droplets when their position relative to the substrate corresponds to the position of a special polar coordinate grid point (20A, 20B) at which the comparison yields a correspondence.

14. The method as claimed in claim 13, **characterized in that** a layer stack (2) is applied to the substrate (3), said layer stack having at least two layers with material droplets arranged over one another, **in that** a first set and a second set with special polar coordinate grid points (20, 20') of the specific polar coordinate grid are ascertained in such a way that the polar coordinate grid points (20, 20') are arranged differently in the specific polar coordinate grid in the sets,
- **in that**, for applying a first layer of the material droplets, pixels or vectors assigned thereto of the specific Cartesian coordinate system are transformed into polar coordinates and the first polar coordinate image data obtained thus are compared to the special polar coordinate grid points (20, 20', 20A, 20B) of the first set, and
- **in that**, for applying a second layer of the material droplets, pixels or vectors assigned thereto of the specific Cartesian coordinate system are transformed into polar coordinates and the second polar coordinate image data obtained thus are compared to the special polar coordinate grid points (20, 20', 20A, 20B) of the second set.

15. The method as claimed in claim 12 or 14, **characterized in that** the polar coordinate grid points (20') of the first set and of the second set are rotated relative to one another through an angle about the origin and **in that** the angle preferably corresponds to the angular distance between the special polar coordinate grid points situated on the outermost circle or to an integer multiple of this angular distance.

16. The method as claimed in any one of claims 11 to 15, **characterized in that** the angular distance between the special polar coordinate grid points (20, 20', 20A, 20B) is determined in such a way that the distance between two special points of the polar coordinate grid lying next to one another on the same circle (R1, R2, R1' ... R7', R1" ... R13") corresponds to at least a fraction of the nozzle distance, but preferably one times the nozzle distance, wherein the distance is adapted in such a way that it corresponds to a unit fraction of a complete circle.

17. The method as claimed in any one of claims 11 to 16, **characterized in that** the angular distance between the rays (A1, A2, A1', A2', A3') of the specific polar coordinate grid is determined in such a way that it corresponds to an integer multiple of the angular distance between the first rays (A1, A1').

18. The method as claimed in any one of claims 11 to 17, **characterized in that** the material droplets are produced with different volumes at at least two polar coordinate grid points (20).

19. The method as claimed in claim 18, **characterized in that** first material droplets are arranged at first polar coordinate grid points (20) on a segment of a first circle (R1") of the polar coordinate grid and second material droplets are arranged at second polar coordinate grid points (20) on a segment of a second circle (R2") of the polar coordinate grid, **in that** the diameter of the second circle (R2") is less than the diameter of the first circle (R1") and the segments respectively extend from a first to a further ray (A1", A3") of the polar coordinate grid, and **in that** the sum of the volumes of the second material droplets (20) is less than the sum of the volumes of the first material droplets (20).

## Revendications

1. Dispositif (1) pour l'application d'un matériau coulant sur un support (3) pouvant tourner autour d'un axe de rotation (4) en fonction de données d'images prédéfinies qui sont consignées sous forme de points d'images ou de vecteurs d'un système de coordonnées cartésiennes déterminé dans une première mémoire (18), comprenant au moins une tête d'impression (13A, 13B) qui présente plusieurs injecteurs disposés à une distance d'injecteur les uns des autres pour distribuer des gouttelettes de matériau du matériau coulant et qui est disposée à une distance verticale par rapport au support, et un dispositif de commande (8) pour positionner le support (3) par rapport à l'au moins une tête d'impression (13A, 13B) ainsi que pour commander la distribution des gouttelettes de matériau, une deuxième mémoire (19) étant prévue, dans laquelle des points de trame de coordonnées polaires particuliers (20, 20', 20A, 20B) d'une trame de coordonnées polaires déterminée qui sont disposés sur des cercles (R1, R2, R1'.. R7', R1" .. R13") qui présentent un espacement de cercles prédéterminé les uns des autres et qui sont disposés sur des premiers rayons (A1, A1') qui sont à une première distance angulaire les uns des autres, et qui sont disposés dans la direction de l'origine sur des rayons supplémentaires (A2, A2' A3') qui sont à une distance angulaire les uns des autres qui est supérieure à la première distance angulaire, sont consignés sous forme de points de trame cartésiens dans des coordonnées du système de coordonnées cartésiennes déterminé, un ordinateur (15) étant prévu, au moyen duquel les points de trame cartésiens sont comparés avec les points d'images ou les vecteurs des données d'images, et les injecteurs de la tête d'impression (13A, 13B) pouvant être commandés de telle sorte qu'ils ne distribuent des gouttelettes de matériau que lorsque leur position relative par rapport au support correspond à la position d'un point de trame de coordonnées polaires particulier (20A, 20B) pour lequel la comparaison produit une coïncidence.

2. Dispositif (1) selon la revendication 1, **caractérisé en ce que** dans la première mémoire (18) sont consignées des données d'images pour une première et une deuxième couche d'un empilement de couches (2) à constituer à partir d'au moins deux couches de gouttelettes de matériau, **en ce que** dans la deuxième mémoire (19) est consigné un premier et un deuxième jeu avec des points de trame de coordonnées polaires (20, 20') particuliers, **en ce que** dans le cas de ces jeux, les points de trame de coordonnées polaires (20, 20') sont disposés différemment dans la trame de coordonnées polaires déterminée, et **en ce qu'**à l'aide de l'ordinateur (15)
- les points de trame de coordonnées polaires (20) du premier jeu peuvent être transformés en coordonnées du système de coordonnées cartésiennes déterminé et les premiers points de trame cartésiens ainsi obtenus peuvent être comparés avec les points d'images ou avec les vecteurs des données d'images de la première couche, et
- les points de trame de coordonnées polaires (20') du deuxième jeu peuvent être transformés en coordonnées du système de coordonnées cartésiennes déterminé et les deuxièmes points de trame cartésiens ainsi obtenus sont comparés avec les points d'images ou avec les vecteurs des données d'images de la deuxième couche.

3. Dispositif (1) pour l'application d'un matériau coulant sur un support (3) pouvant tourner autour d'un axe de rotation (4) en fonction de données d'images prédéfinies qui sont consignées sous forme de points d'images ou de vecteurs d'un système de coordonnées cartésiennes déterminé dans une première mémoire (18), comprenant au moins une tête d'impression (13A, 13B) qui présente plusieurs injecteurs disposés à une distance d'injecteur les uns des autres pour distribuer des gouttelettes de matériau du matériau coulant et qui est disposée à une distance verticale par rapport au support, et un dispositif de commande (8) pour positionner le support (3) par rapport à l'au moins une tête d'impression (13A, 13B) ainsi que pour commander la distribution des gouttelettes de matériau, une deuxième mémoire (19) étant prévue, dans laquelle sont consignés des points de trame de coordonnées polaires particuliers (20, 20', 20A, 20B) d'une trame de coordonnées polaires déterminée qui sont disposés sur des cercles (R1, R2, R1'.. R7', R1" .. R13") qui présentent un espacement de cercles prédéterminé les uns des autres et qui sont disposés sur des premiers rayons (A1, A1') qui sont à une première distance angulaire les uns des autres, et qui sont disposés dans la direction de l'origine sur des rayons supplémentaires (A2, A2' A3') qui sont à une distance angulaire les uns des autres qui est supérieure à la première distance angulaire, un ordinateur (15) étant prévu, au moyen duquel les points d'images ou les vecteurs consignés dans la première mémoire (18) peuvent être transformés en coordonnées polaires, et les données d'images de coordonnés polaires ainsi obtenues sont comparées avec les points de trame de coordonnées polaires particuliers (20, 20', 20A, 20B) consignés dans la deuxième mémoire (19), et les injecteurs de la tête d'impression (13A, 13B) pouvant être commandés de telle sorte qu'ils ne distribuent des gouttelettes de matériau que lorsque leur position relative par rapport au support correspond à la position d'un point de trame de coordonnées polaires particulier (20A, 20B) pour lequel la comparaison produit une coïncidence.

4. Dispositif (1) selon la revendication 3, **caractérisé en ce que** dans la première mémoire (18) sont consignées des données d'images pour une première et pour une deuxième couche d'un empilement de couches (2) à constituer à partir d'au moins deux couches de gouttelettes de matériau, **en ce que** dans la deuxième mémoire (19) sont consignés un premier et un deuxième jeu avec des points de trame de coordonnées polaires (20, 20') particuliers, **en ce que** dans le cas de ces jeux, les points de trame de coordonnées polaires (20, 20') sont disposés différemment dans la trame de coordonnées polaires déterminée, et **en ce qu'**à l'aide de l'ordinateur (15)
- les points d'images ou les vecteurs consignés dans la première mémoire (18) pour la première couche peuvent être transformés en coordonnées polaires et les premières données d'images de coordonnées polaires ainsi obtenues sont comparées avec les points de trame de coordonnées polaires particuliers (20, 20', 20A, 20B) du premier jeu consignés dans la deuxième mémoire (19), et
- les points d'images ou les vecteurs consignés dans la première mémoire (18) pour la deuxième couche peuvent être transformés en coordonnées polaires et les deuxièmes données d'images de coordonnées polaires ainsi obtenues sont comparées avec les points de trame de coordonnées polaires particuliers (20, 20', 20A, 20B) du deuxième jeu consignés dans la deuxième mémoire (19).

5. Dispositif (1) selon l'une quelconque des revendications 1 à 4, **caractérisé en ce que** les injecteurs sont disposés de telle sorte qu'une droite s'étendant à travers au moins deux injecteurs s'étende parallèlement à un rayon (A1, A2, A1', A2', A3') de la trame de coordonnées polaires.

6. Dispositif (1) selon l'une quelconque des revendications 1 à 5, **caractérisé en ce que** l'espacement de cercles correspond à l'espacement des injecteurs.

7. Dispositif (1) selon l'une quelconque des revendications 1 à 6, **caractérisé en ce que** la distance angulaire des points de trame de coordonnées polaires particuliers (20, 20', 20A, 20B) consignés dans la deuxième mémoire (19) est choisie de telle sorte que la distance de deux points de trame de coordonnées polaires particuliers (20, 20', 20A, 20B) de la trame de coordonnées polaires situés l'un à côté de l'autre sur le même cercle (R1, R2, R1'.. R7', R1" .. R13") corresponde au moins à 0,6 fois, de préférence à 0,8 fois, en particulier à une fois l'espacement des injecteurs, la distance angulaire étant choisie de telle sorte qu'elle corresponde à une fraction souche d'un cercle complet ou d'une rotation.

8. Dispositif (1) selon l'une quelconque des revendications 1 à 7, **caractérisé en ce que** la distance angulaire des rayons supplémentaires (A2, A2', A3') de la trame de coordonnées polaires déterminée correspond à un multiple entier de la distance angulaire des premiers rayons (A1, A1').

9. Dispositif (1) selon l'une quelconque des revendications 1 à 7, **caractérisé en ce qu'**au moins deux points de trame de coordonnées polaires (20) sont associés à des gouttelettes de matériau de différents volumes, **en ce que** dans la deuxième mémoire (19) pour les points de trame de coordonnées polaires (20) individuels est à chaque fois consignée une information de volume pour une gouttelette de matériau à distribuer au niveau du point de trame de coordonnées polaires (20) concerné, et **en ce que** le dispositif (1) est configuré de telle sorte que les gouttelettes de matériau soient appliquées aux endroits à imprimer à chaque fois avec un volume qui correspond à l'information de volume consignée dans la deuxième mémoire (19) pour le point de trame de coordonnées polaires (20) concerné.

10. Dispositif (1) selon la revendication 9, **caractérisé en ce que** des premiers points de trame de coordonnées polaires (20) sont disposés sur un premier cercle (R1") de la trame de coordonnées polaires et des points de trame de coordonnées polaires (20) supplémentaires sont disposés sur un cercle supplémentaire (R3") de la trame de coordonnées polaires, **en ce que** le diamètre du cercle supplémentaire (R3") est inférieur au diamètre du premier cercle (R1"), et **en ce que** les informations de volume consignées dans la deuxième mémoire (19) sont choisies de telle sorte que la somme des volumes associés aux points de trame de coordonnées polaires (20) du cercle supplémentaire (R3") soit inférieure à la somme des volumes associés aux points de trame de coordonnées polaires (20) du premier cercle (R1").

11. Procédé pour l'application d'un matériau coulant sur un support (3) pouvant tourner autour d'un axe de rotation (4) en fonction de données d'images prédéfinies qui sont consignées sous forme de points d'images ou de vecteurs d'un système de coordonnées cartésiennes déterminé dans une première mémoire (18), des gouttelettes de matériau du matériau coulant étant appliquées sur le support (3) au moyen d'une tête d'impression (13A, 13B) qui présente plusieurs injecteurs disposés à une distance d'injecteur les uns des autres, des points de trame de coordonnées polaires particuliers (20, 20', 20A, 20B) d'une trame de coordonnées polaires déterminée, qui sont disposés sur des cercles (R1, R2, R1'.. R7', R1" .. R13") qui présentent un espacement de cercles prédéterminé les uns des autres et qui sont disposés sur des premiers rayons (A1, A1') qui présentent une première distance angulaire les uns des autres, étant déterminés, et lesquels points de trame de coordonnées polaires particuliers étant disposés dans la direction de l'origine sur des rayons supplémentaires (A2, A2', A3') qui présentent une distance angulaire les uns des autres supérieure à la première distance angulaire, les points de trame de coordonnées polaires particuliers (20, 20', 20A, 20B) étant transformés en coordonnées du système de coordonnées cartésiennes déterminé, et les points de trame cartésiens ainsi obtenus étant comparés avec les points d'images ou les vecteurs des fichiers de données, et les injecteurs de la tête d'impression (13A, 13B) étant commandés de telle sorte qu'ils ne distribuent des gouttelettes de matériau que lorsque leur position relative par rapport au support correspond à la position d'un point de trame de coordonnées polaires particulier (20A, 20B) pour lequel la comparaison produit une coïncidence.

12. Procédé selon la revendication 11, **caractérisé en ce qu'**un empilement de couches (2) est appliqué sur le support (3), lequel présente au moins deux couches de gouttelettes de matériau superposées, **en ce qu'**un premier et un deuxième jeu de points de trame de coordonnées polaires (20, 20') particuliers de la trame de coordonnées polaires déterminée sont déterminés de telle sorte que dans le cas des jeux, les points de trame de coordonnées polaires (20, 20') soient disposés différemment dans la trame de coordonnées polaires déterminée,
- **en ce que** pour l'application d'une première couche de gouttelettes de matériau, les points de trame de coordonnées polaires (20) particuliers du premier jeu sont transformés en coordonnées du système de coordonnées cartésiennes déterminé et les points de trame cartésiens ainsi obtenus sont comparés avec des premiers points d'images ou vecteurs des fichiers de données prévus pour la première couche, et
- **en ce que** pour l'application d'une deuxième couche des gouttelettes de matériau, les points de trame de coordonnées polaires (20) particuliers du deuxième jeu sont transformés en coordonnées du système de coordonnées cartésiennes déterminé, et les points de trame cartésiens ainsi obtenus sont comparés avec des deuxièmes points d'images ou vecteurs des fichiers de données prévus pour la deuxième couche.

13. Procédé pour l'application d'un matériau coulant sur un support (3) pouvant tourner autour d'un axe de rotation (4) en fonction de données d'images prédéfinies qui sont consignées sous forme de points d'images ou de vecteurs d'un système de coordonnées cartésiennes déterminé dans une première mémoire (18), des gouttelettes de matériau du matériau coulant étant appliquées sur le support (3) au moyen d'une tête d'impression (13A, 13B) qui présente plusieurs injecteurs disposés à une distance d'injecteur les uns des autres, des points de trame de coordonnées polaires particuliers (20, 20', 20A, 20B) d'une trame de coordonnées polaires déterminée, qui sont disposés sur des cercles (R1, R2, R1'.. R7', R1" .. R13") qui présentent un espacement de cercles prédéterminé les uns des autres et qui sont disposés sur des premiers rayons (A1, A1') qui présentent une première distance angulaire les uns des autres, étant déterminés, et lesquels points de trame de coordonnées polaires particuliers étant disposés dans la direction de l'origine sur des rayons supplémentaires (A2, A2', A3') qui présentent une distance angulaire les uns des autres supérieure à la première distance angulaire, les points d'images ou les vecteurs du système de coordonnées cartésiennes déterminé étant transformés en coordonnées polaires et les données d'images de coordonnées polaires ainsi obtenues étant comparées avec les points de trame de coordonnées polaires particuliers (20, 20', 20A, 20B), et les injecteurs de la tête d'impression (13A, 13B) étant commandés de telle sorte qu'ils ne distribuent des gouttelettes de matériau que lorsque leur position relative par rapport au support correspond à la position d'un point de trame de coordonnées polaires particulier (20A, 20B) pour lequel la comparaison produit une coïncidence.

14. Procédé selon la revendication 13, **caractérisé en ce qu'**un empilement de couches (2) est appliqué sur le support (3), lequel présente au moins deux couches de gouttelettes de matériau superposées, **en ce qu'**un premier et un deuxième jeu de points de trame de coordonnées polaires (20, 20') particuliers de la trame de coordonnées polaires déterminée sont déterminés de telle sorte que dans le cas des jeux, les points de trame de coordonnées polaires (20, 20') soient disposés différemment dans la trame de coordonnées polaires déterminée,
- **en ce que** pour l'application d'une première couche de gouttelettes de matériau, des points d'images ou des vecteurs du système de coordonnées cartésiennes déterminé associés à celle-ci sont transformés en coordonnées polaires, et les premières données d'images de coordonnées polaires ainsi obtenues sont comparées avec les points de trame de coordonnées polaires particuliers (20, 20', 20A, 20B) du premier jeu, et
- **en ce que** pour l'application d'une deuxième couche des gouttelettes de matériau, des points d'images ou des vecteurs du système de coordonnées cartésiennes déterminé associés à celle-ci sont transformés en coordonnées polaires, et les deuxièmes données d'images de coordonnées polaires ainsi obtenues sont comparées avec les points de trame de coordonnées polaires particuliers (20, 20', 20A, 20B) du deuxième jeu.

15. Procédé selon la revendication 12 à 14, **caractérisé en ce que** les points de trame de coordonnées polaires (20') du premier et du deuxième jeu sont tournés les uns par rapport aux autres d'un certain angle autour de l'origine, et **en ce que** l'angle correspond de préférence à la distance angulaire des points de trame de coordonnées polaires particuliers se trouvant sur le cercle le plus extérieur ou à un multiple entier de cette distance angulaire.

16. Procédé selon l'une quelconque des revendications 11 à 15, **caractérisé en ce que** la distance angulaire des points de trame de coordonnées polaires particuliers (20, 20', 20A, 20B) est déterminée de telle sorte que la distance de deux points de la trame de coordonnées polaires particuliers situés l'un à côté de l'autre sur le même cercle (R1, R2, R1'.. R7', R1" .. R13") corresponde au moins à une fraction, de préférence toutefois à une fois l'espacement des injecteurs, la distance étant adaptée de telle sorte qu'elle corresponde à une fraction souche d'un cercle complet.

17. Procédé selon l'une quelconque des revendications 11 à 16, **caractérisé en ce que** la distance angulaire des rayons (A1, A2, A1', A2', A3') de la trame de coordonnées polaires déterminée est déterminée de telle sorte qu'elle corresponde à un multiple entier de la distance angulaire des premiers rayons (A1, A1').

18. Procédé selon l'une quelconque des revendications 11 à 17, **caractérisé en ce que** les gouttelettes de matériau sont produites au niveau d'au moins deux points de trame de coordonnées (20) polaires avec des volumes différents.

19. Procédé selon la revendication 18, **caractérisé en ce que**, sur un segment d'un premier cercle (R1") de la trame de coordonnées polaires, des premières gouttelettes de matériau sont disposées sur des premiers points de trame de coordonnées polaires (20), et sur un segment d'un deuxième cercle (R2") de la trame de coordonnées polaires, des deuxièmes gouttelettes de matériau sont disposées sur des deuxièmes points de trame de coordonnées polaires (20), **en ce que** le diamètre du deuxième cercle (R2") est inférieur au diamètre du premier cercle (R1") et les segments s'étendent à chaque fois depuis un premier rayon jusqu'à un rayon supplémentaire (A1", A3") de la trame de coordonnées polaires, et **en ce que** la somme des volumes des deuxièmes gouttelettes de matériau (20) est inférieure à la somme des volumes des premières gouttelettes de matériau (20).
